# EUROPÄISCHE PATENTSCHRIFT

(11) **EP 3 901 013 B1**
(45) Veröffentlichungstag und Bekanntmachung des Hinweises auf die Patenterteilung: **03.05.2023**
(21) Anmeldenummer: 21169699.2
(22) Anmeldetag: 21.04.2021
(51) Int. Cl.: B62J 1/08

(54) **FAHRRADKOMPONENTE MIT EINER VERSTELLBAREN SATTELSTÜTZEINRICHTUNG**
BICYCLE COMPONENT WITH AN ADJUSTABLE SADDLE SUPPORT DEVICE
COMPOSANT DE BICYCLETTE POURVU DE DISPOSITIF DE TIGE DE SELLE RÉGLABLE

(30) Priorität: 24.04.2020 DE 102020111306
(43) Veröffentlichungstag der Anmeldung: 27.10.2021
(73) Patentinhaber: DT Swiss AG, 2504 Biel (CH)
(72) Erfinder: Hoffmann, Jerome, CH-3280 Meyriez (CH)
(74) Vertreter: BSB Patentanwälte Schütte & Engelen Partnerschaft mbB

(56) Entgegenhaltungen:
- WO-A1-2016/029301
- DE-A1-102007 063 365

## Beschreibung

Die vorliegende Erfindung betrifft eine Fahrradkomponente für ein wenigstens teilweise mit Muskelkraft betriebenes Fahrrad mit einer zwischen wenigstens zwei Stellungen verstellbaren Sattelstützeinrichtung. Die Sattelstützeinrichtung umfasst wenigstens zwei in einer axialen Richtung relativ zueinander teleskopartig bewegbare Stützelemente.

Solche verstellbaren Sattelstützen, auch als Teleskopstützen bezeichnet, bieten eine zügige und einfache Anpassung der Sattelhöhe an die jeweilige Fahrsituation. Denn für eine sichere Beherrschung des Fahrrads und für eine günstige Kraftübertragung ist es wichtig, dass die Sattelhöhe optimal eingestellt ist. Das gilt sowohl für Alltags- bzw. Cityräder als auch für Sportfahrräder.

Beispielsweise muss bei Bergabfahrten der Sattel entsprechend tief stehen, damit der Fahrer sein Gewicht hinter den Sattel bringen kann, um den Schwerpunkt nach hinten zu verlagern. Beim Fahren in der Sitzposition muss die Sattelhöhe ergonomisch eingestellt sein, um einen günstigen Krafteintrag in den Antrieb zu ermöglichen.

Um zu verhindern, dass sich der Sattel im Betrieb und auch beim Absenken bzw. Auseinanderfahren der Sattelstützeinrichtung verdreht, sind solche Sattelstützen oft mit einer Verdrehsicherung ausgestattet. In der Regel werden dazu mehrere Klemmstücke eingesetzt, welche die Stützelemente drehfest miteinander koppeln. Um das Teleskopieren zu ermöglichen, sind die Klemmstücke in jeweils einer Führungsnut verschiebbar gelagert.

Allerdings ist bei derartigen Verdrehsicherungen mitunter noch ein geringes, aber deutlich wahrnehmbares Verdrehen des Sattels möglich. Um dieses Rotationsspiel zu beseitigen, müssen die Klemmstücke und die Führungsnut eine sehr präzise Passung aufweisen. Daher müssen diese Teile der Verdrehsicherung in der Regel mit einer besonders geringen Toleranz gefertigt werden. Das führt zu einem hohen Aufwand an Zeit und Kosten.

Eine gattungsgemäße Sattelstützeinrichtung mit einer Verdrehsicherung ist aus der DE 10 2007 063 365 A1 bekannt.

Es ist daher die Aufgabe der vorliegenden Erfindung, eine verbesserte Fahrradkomponente mit einer zuverlässigen und zugleich unaufwendig und wirtschaftlich herstellbaren Verdrehsicherung zur Verfügung zu stellen. Insbesondere soll die Verdrehsicherung dabei ein besonders geringes Rotationsspiel aufweisen.

Diese Aufgabe wird gelöst durch eine Fahrradkomponente mit den Merkmalen des Anspruchs 1. Bevorzugte Weiterbildungen sind Gegenstand der Unteransprüche. Weitere Vorteile und Merkmale der vorliegenden Erfindung ergeben sich aus der allgemeinen Beschreibung und der Beschreibung der Ausführungsbeispiele.

Die erfindungsgemäße Fahrradkomponente ist für ein wenigstens teilweise mit Muskelkraft betriebenes Fahrrad vorgesehen. Die Fahrradkomponente umfasst eine zwischen wenigstens zwei Stellungen verstellbare Sattelstützeinrichtung. Das Verstellen dient insbesondere zum Anpassen einer Sattelhöhe. Die Sattelstützeinrichtung umfasst wenigstens zwei in einer axialen Richtung relativ zueinander teleskopartig bewegbare Stützelemente. Die Stützelemente umfassen wenigstens ein erstes Stützelement und wenigstens ein zweites Stützelement. Die Fahrradkomponente umfasst wenigstens eine Verdrehsicherung mit wenigstens einem die Stützelemente drehfest miteinander koppelnden Klemmstück. Das Klemmstück ist in einer Führungsnut verschiebbar aufgenommen. Mittels der Verdrehsicherung ist eine Drehbewegung des ersten Stützelements relativ zum zweiten Stützelement wenigstens teilweise und insbesondere formschlüssig blockierbar. Dabei umfasst eine bevorzugte Verdrehsicherung wenigstens eine Keileinrichtung mit wenigstens einer in axialer Richtung an das Klemmstück drückbaren Keileinheit. Dabei ist durch ein Aneinanderdrücken von Klemmstück und Keileinheit das Klemmstück quer zur axialen Richtung und in Umfangsrichtung der Stützelemente relativ zur Führungsnut bewegbar.

Die erfindungsgemäße Fahrradkomponente bietet viele Vorteile. Einen erheblichen Vorteil bietet die Verdrehsicherung mit der Keileinheit, welche mit dem Klemmstück zusammenwirkt und dieses bewegt. Dadurch kann ein unerwünschtes Rotationsspiel erheblich reduziert oder sogar ganz ausgeglichen werden. Zugleich sind mit der Erfindung größere Toleranzen in der Fertigung möglich, ohne dass ein unerwünschtes Spiel oder Verdrehen des Sattels in Kauf genommen werden muss. Die Fahrradkomponente kann daher besonders unaufwendig und wirtschaftlich gefertigt werden. Die Erfindung bietet somit trotz größerer Toleranzen bei der Fertigung ein erheblich geringeres Rotationsspiel, wenn Klemmstück und Keileinheit aneinandergedrückt werden.

Vorzugsweise sind das Klemmstück und die Keileinheit wenigstens durch ein Verstellen der Sattelstützeinrichtung aneinander drückbar. So kann zusammen mit der Einstellung der Sattelhöhe zugleich auch das Rotationsspiel blockiert werden. Insbesondere sind das Klemmstück und die Keileinheit in axialer Richtung aneinander drückbar. Das Klemmstück und die Keileinheit sind insbesondere durch das teleskopartige Bewegen der Sattelstützeinrichtung in axialer Richtung relativ zueinander bewegbar und dadurch aneinander drückbar. Das Aneinanderdrücken erfolgt insbesondere in Bewegungsrichtung der Verstellbewegung.

Vorzugsweise sind das Klemmstück und die Keileinheit durch ein Ausfahren der Sattelstützeinrichtung aneinander drückbar. Insbesondere ist die Verdrehsicherung dazu geeignet und ausgebildet, ein Rotationsspiel nur in der ausgefahrenen Stellung der Sattelstützeinrichtung mittels Aneinanderdrücken von Keileinheit und Klemmstück auszugleichen. Das Klemmstück und die Keileinheit können auch durch ein Einfahren der Sattelstützeinrichtung aneinander drückbar sein.

In einer besonders vorteilhaften Ausgestaltung sind das Klemmstück und die Keileinheit in wenigstens einer der Stellungen und besonders bevorzugt in einer ausgefahrenen Stellung der Sattelstützeinrichtung aneinandergedrückt bzw. aneinander drückbar. Eine solche Ausgestaltung hat sich als besonders vorteilhaft erwiesen, da ein Rotationsspiel in der ausgefahrenen Stellung als besonders störend empfunden wird. Die ausgefahrene Stellung ist z. B. für eine sitzende Fahrweise vorgesehen, sodass hier ein spielfreier Sitz des Sattels besonders von Vorteil ist. In der abgesenkten Stellung steht der Fahrer in der Regel, sodass ein Rotationsspiel unproblematisch ist. Auch während des Verstellens ist das Rotationsspiel eher ohne Einfluss auf Komfort und Performance der Sattelstützeinrichtung.

Bevorzugt sind das Klemmstück und die Keileinheit nur einer der Stellungen aneinandergedrückt bzw. aneinander drückbar. Insbesondere werden das Klemmstück und die Keileinheit außerhalb der Stellung und vorzugsweise außerhalb der ausgefahrenen Stellung nicht aneinandergedrückt. Insbesondere sind außerhalb der Stellung das Klemmstück und die Keileinheit zueinander beabstandet. Das Klemmstück und die Keileinheit können auch in einer anderen Stellung und z. B. in einer eingefahrenen Stellung aneinandergedrückt bzw. aneinander drückbar sein.

Es ist bevorzugt und vorteilhaft, dass durch das Aneinanderdrücken von Klemmstück und Keileinheit die Stützelemente gegeneinander verspannbar sind. Dadurch ist insbesondere ein Rotationsspiel zwischen den Stützelementen in wenigstens eine Drehrichtung und besonders bevorzugt in beide Drehrichtungen wenigstens teilweise blockierbar. Die Anmelderin behält sich vor, eine solche Ausführung einer Fahrradkomponente nach dem Oberbegriff von Anspruch 1 zu beanspruchen. Wenn das Klemmstück und die Keileinheit beabstandet bzw. nicht aneinander gedrückt sind, sind die Stützelemente insbesondere nicht gegeneinander verspannt. Insbesondere ist ohne dass bestimmungsgemäße Aneinanderdrücken von Klemmstück und Keileinheit ein Rotationsspiel zwischen den Stützelementen in wenigstens eine und insbesondere in beide Drehrichtungen ausgebildet.

Es ist ebenfalls vorteilhaft und bevorzugt, dass die Verdrehsicherung nur eine Führungsnut und nur ein Klemmstück aufweist. Dadurch weist die Fahrradkomponente ein besonders geringes Gewicht auf und kann zugleich erheblich unaufwendiger gefertigt werden. Bei den bekannten Sattelstützen sind in der Regel drei Führungsnuten und drei Klemmstücke mit besonders geringen Toleranzen vorgesehen, um dem Rotationsspiel entgegen wirken zu können. Bei der Erfindung hat sich hingegen gezeigt, dass eine Verdrehsicherung ohne oder mit einem besonders geringen Spiel auch mit nur einer Führungsnut bzw. nur einem Klemmstück zuverlässig umsetzbar ist. Insbesondere umfasst eine solche Verdrehsicherung auch nur eine Keileinheit.

Es ist aber möglich, dass die Verdrehsicherung wenigstens zwei oder wenigstens drei oder mehr Führungsnuten und/oder Klemmstücke aufweist. Beispielsweise sind die Führungsnut bzw. das Klemmstück dann über einen radialen Umfang eines jeweiligen Stützelements verteilt, beispielsweise im Winkel von 120°.

Insbesondere ist das Klemmstück mit einem Mindestspiel in der Führungsnut aufgenommen. Vorzugsweise wird dadurch ein gezieltes Verschieben und/oder (sehr leichtes) Kippen des Klemmstücks in der Führungsnut durch die Keileinheit gewährleistet. Insbesondere ist das Mindestspiel quer zur axialen Richtung ausgebildet. Insbesondere ist die Führungsnut um ein definiertes Mindestmaß breiter und/oder höher als das Klemmstück ausgebildet. Durch ein solches Mindestspiel wird ein zuverlässiger Ausgleich des Rotationsspiels ermöglicht und zugleich die Fertigung erheblich vereinfacht.

Das Klemmstück und die Keileinheit sind vorzugsweise beim Aneinanderdrücken an jeweils einem Stützelement abstützbar. Insbesondere ist das Klemmstück am ersten Stützelement abstützbar. Insbesondere ist die Keileinheit am zweiten Stützelement abstützbar. Möglich ist auch eine umgekehrte Ausführung, sodass das Klemmstück am zweiten Stützelement und die Keileinheit am ersten Stützelement abstützbar sind. Insbesondere dienen die Stützelemente als Widerlager für die Kräfte beim Aneinanderdrücken von Klemmstück und Keileinheit und für das Verkeilen des Klemmstücks in der Führungsnut.

Es ist bevorzugt und vorteilhaft, dass durch das Aneinanderdrücken von Klemmstück und Keileinheit das Klemmstück seitwärts (quer zur axialen Richtung) verschiebbar und/oder kippbar ist. Insbesondere ist das Klemmstück dadurch wenigstens abschnittsweise mit wenigstens einer Längsseite an wenigstens eine Längswandung der Führungsnut drückbar. Insbesondere ist das Klemmstück derart verschiebbar, dass es entlang seiner gesamten Längsseite an der Längswandung anliegt. Durch das Kippen liegt das Klemmstück mit der Längsseite insbesondere nur abschnittsweise an der Längswandung an.

Insbesondere ist das Klemmstück bei einem Verstellen der Sattelstützeinrichtung zwischen den Stellungen (bei einem Teleskopieren der Stützelemente) innerhalb der Führungsnut in axialer Richtung verschiebbar. Insbesondere sind das Klemmstück und die Führungsnut beim Verstellen der Sattelstützeinrichtung relativ zueinander verschiebbar. Insbesondere ist das Klemmstück axial verschiebbar in der Führungsnut angeordnet.

In einer bevorzugten und vorteilhaften Ausgestaltung sind die Führungsnut und die Keileinheit an einem gemeinsamen (demselben) Stützelement angeordnet. Insbesondere ist die Führungsnut an dem Stützelement ausgebildet, an welchem auch die Keileinheit befestigt ist. Bevorzugt ist, dass das Klemmstück an einem anderen Stützelement als die Führungsnut und die Keileinheit befestigt ist. Insbesondere sind die Führungsnut und die Keileinheit an dem zweiten Stützelement und das Klemmstück an dem ersten Stützelement angeordnet.

Vorzugsweise sind die Keileinheit und/oder die Führungsnut an einer radialen Innenseite des zweiten Stützelements angeordnet. Insbesondere sind die Keileinheit und/oder die Führungsnut dort befestigt bzw. ausgebildet. Vorzugsweise ist das Klemmstück an einer radialen Außenseite des ersten Stützelements angeordnet und insbesondere befestigt.

Insbesondere ist die Keileinheit unbewegbar an dem Stützelement befestigt. Die Keileinheit kann auch wenigstens teilweise bewegbar an dem Stützelement befestigt sein. Dann wird die Bewegbarkeit insbesondere durch das Aneinanderdrücken von Klemmstück und Keileinheit blockiert. Insbesondere ist die Keileinheit mit wenigstens einem vorzugsweise verschraubbaren Halteelement an dem Stützelement gesichert und insbesondere bewegbar oder unbewegbar befestigt.

Insbesondere umfasst die Fahrradkomponente wenigstens einen (mechanischen) Anschlag für die Verstellbewegung, sodass die Stützelemente nicht über die ausgefahrene Stellung hinaus teleskopierbar sind und/oder nicht unbeabsichtigt voneinander lösbar sind. Das Halteelement kann einen solchen Anschlag bereitstellen.

Die Führungsnut ist insbesondere in und/oder am Stützelement angeordnet. Insbesondere ist die Führungsnut in das Stützelement eingearbeitet. Insbesondere ist die Führungsnut einstückig mit dem Stützelement ausgebildet. Die Führungsnut kann auch als separates Bauteil an dem Stützelement befestigt sein. Insbesondere verläuft die Führungsnut in axialer Richtung im und/oder am Stützelement. Insbesondere ist die Führungsnut an und/oder in einer Wandung des Stützelements angeordnet. Insbesondere ist die Führungsnut zurückspringend an der Innenseite ausgebildet.

Insbesondere ist das Klemmstück derart am Stützelement festgelegt, dass es bei dem Zusammentreffen mit der Keileinheit nicht oder nur teilweise in axialer Richtung ausweichen kann. Insbesondere ist das Klemmstück wenigstens in axialer Richtung unbewegbar an dem Stützelement befestigt. Das Klemmstück kann quer zur axialen Richtung wenigstens teilweise bewegbar und zum Beispiel verschiebbar oder kippbar sein. Vorzugsweise ist das Klemmstück quer zur axialen Richtung unbewegbar an dem Stützelement befestigt. Insbesondere ist das Klemmstück nur zusammen mit dem Stützelement bewegbar, an welchem es befestigt ist.

In einer besonders bevorzugten Ausgestaltung weist das Stützelement, welches mit der Führungsnut ausgestattet ist, wenigstens im Bereich der Führungsnut eine erhöhte Wandstärke auf. Insbesondere ergibt sich dadurch eine unrunde äußere Querschnittskontur des Stützelements. Insbesondere ist die Wandstärke gegenüber einem Bereich außerhalb der Führungsnut erhöht. Insbesondere ist die Querschnittskontur oval und beispielsweise elliptisch. Ein solches Stützelement ist besonders belastbar und bietet zugleich ein besonders geringes Gewicht. Eine solche Ausgestaltung ist besonders vorteilhaft bei einer Ausführung mit nur einer Führungsnut.

Es ist möglich und bevorzugt, dass das Klemmstück teilweise in wenigstens einen Aufnahmeraum des ersten Stützelements eingelassen ist. Insbesondere ist vorgesehen, dass das Klemmstück dabei über einen äußeren Umfang des ersten Stützelements teilweise hinausragt. Dabei ist auch vorgesehen, dass das Klemmstück (in einem betriebsgemäßen Montagezustand) in die Führungsnut des zweiten Stützelements hineinragt. Insbesondere ist der Aufnahmeraum an der radialen Außenseite des insbesondere ersten Stützelements angeordnet bzw. von dort zugänglich. Insbesondere ist das Klemmstück im Aufnahmeraum befestigt und/oder formschlüssig im Aufnahmeraum aufgenommen.

Es ist bevorzugt und vorteilhaft, dass durch das Aneinanderdrücken von Klemmstück und Keileinheit das erste Stützelement relativ zum zweiten Stützelement drehbar ist bzw. gedreht wird. Insbesondere sind die Stützelemente so lange relativ zueinander drehbar, bis das Klemmstück mit seiner Längsseite an der Längswandung der Führungsnut anliegt.

Das Klemmstück ist vorzugsweise an einem oberen Endabschnitt des ersten Stützelements angeordnet. Vorzugsweise ist die Keileinheit an einem unteren Endabschnitt des zweiten Stützelements angeordnet. Eine solche Ausgestaltung ermöglicht ein zuverlässiges und unaufwendiges Ausgleichen des Rotationsspiels beispielsweise bei einer sogenannten Upside-Down-Anordnung der Stützelemente.

Die Keileinheit umfasst vorzugsweise wenigstens einen Keilabschnitt. Der Keilabschnitt erstreckt sich insbesondere in die Führungsnut. Die Keileinheit umfasst insbesondere wenigstens einen Anbindungsabschnitt. Der Anbindungsabschnitt ist insbesondere außerhalb der Führungsnut angeordnet und insbesondere wenigstens teilweise in das zweite Stützelement eingelassen. Dabei ist bevorzugt, dass eine Passung des Anbindungsabschnitts an bzw. in dem zweiten Stützelement eine geringere Toleranz als eine Passung des Keilabschnitts an bzw. in dem zweiten Stützelement, insbesondere in der Führungsnut, aufweist. Das ermöglicht eine unaufwendige und zugleich präzise Ausrichtung der Keileinheit zur Führungsnut. So kann die Keileinheit unabhängig von der Führungsnut ausgerichtet und befestigt werden.

Es ist möglich, dass der Keilabschnitt mit einem Spiel in der Führungsnut aufgenommen ist. Insbesondere erfolgt die Ausrichtung der Keileinheit zur Führungsnut über den Anbindungsabschnitt. Der Keilabschnitt ist insbesondere an das Klemmstück andrückbar. Am Keilabschnitt ist insbesondere ein Keilprofil ausgebildet.

Möglich ist, dass die Keileinheit durch einen Keilabschnitt und insbesondere nur durch einen Keilabschnitt bereitgestellt wird. Insbesondere ist die Keileinheit dann im Wesentlichen vollständig und insbesondere vollständig in der Führungsnut angeordnet.

In einer vorteilhaften Weiterbildung umfasst die Fahrradkomponente wenigstens eine Verriegelungseinrichtung zum Arretieren der Sattelstützeinrichtung in wenigstens einer der Stellungen und insbesondere wenigstens in beiden Stellungen. Dabei ist die Verriegelungseinrichtung vorzugsweise dazu geeignet und ausgebildet, das Klemmstück und die Keileinheit in einem aneinander gedrückten Zustand zu fixieren. Insbesondere ist die Verriegelungseinrichtung dazu geeignet und ausgebildet, das Klemmstück an einer Position zu sichern, in welcher es an die Längswandung der Führungsnut gedrückt ist. Insbesondere ist die Verriegelungseinrichtung dazu geeignet und ausgebildet, die Stützelemente in einem gegeneinander verspannten Zustand zu fixieren. Insbesondere ist das Rotationsspiel zwischen den Stützelementen in wenigstens eine und vorzugsweise beide Drehrichtungen blockiert, wenn die Verriegelungseinrichtung die Sattelstützeinrichtung in einer Stellung arretiert. Insbesondere ist die Verriegelungseinrichtung dazu geeignet und ausgebildet, das Klemmstück und die Keileinheit dann in einem aneinander gedrückten Zustand zu fixieren, wenn eine ausgefahrene Stellung oder eingefahrene Stellung vorliegt.

In einer vorteilhaften und bevorzugten Ausgestaltung ist die Verdrehsicherung wenigstens teilweise, insbesondere vollständig, oberhalb eines Riegelelements der Verriegelungseinrichtung angeordnet. Insbesondere sind wenigstens das Klemmstück und/oder wenigstens die Keileinheit und/oder wenigstens die Führungsnut wenigstens teilweise oberhalb eines Riegelelements der Verriegelungseinrichtung angeordnet. Eine solche Ausgestaltung bietet viele Vorteile hinsichtlich der Verriegelung und auch der Verdrehsicherung. In einer ebenfalls vorteilhaften Ausgestaltung ist die Keileinheit wenigstens teilweise unterhalb des Riegelelements angeordnet. Die Keileinheit kann teilweise überlappend zu dem Riegelelement angeordnet sein.

Die Verriegelungseinrichtung umfasst bevorzugt wenigstens ein Riegelelement. Das Riegelelement erstreckt sich im arretierten Zustand insbesondere durch wenigstens eine Wandung des ersten Stützelements hindurch in das zweite Stützelement. Beispielsweise ist in der Wandung wenigstens eine Bohrung angeordnet. Insbesondere ist eine Mehrzahl von Riegelelementen vorgesehen. Im arretierten Zustand erstreckt sich das Riegelelement insbesondere nur in einen Teil einer Wandung des zweiten Stützelements. Die Verriegelungseinrichtung ist insbesondere dazu geeignet und ausgebildet, das Riegelelement mittels wenigstens eines Kolbenelements wenigstens teilweise in das zweite Stützelement zu drücken. Insbesondere liegt eine arretierte Stellung vor, wenn das Kolbenelement das Riegelelement in das zweite Stützelement drückt. Das Riegelelement bzw. die Riegelelemente ist bzw. sind vorzugsweise lose eingelegt und werden insbesondere nicht geführt. In einer vorteilhaften Ausgestaltung umfasst das Riegelelement wenigstens eine Kugel oder ist als wenigstens eine solche ausgebildet.

Die Fahrradkomponente umfasst insbesondere wenigstens eine Kraftspeichereinrichtung. Die Kraftspeichereinrichtung ist insbesondere dazu geeignet und ausgebildet, durch ein Einfahren der Sattelstützeinrichtung wenigstens teilweise aufgeladen zu werden und/oder durch ein Ausfahren der Sattelstützeinrichtung wenigstens teilweise entladen zu werden. Dadurch ist die Sattelstützeinrichtung insbesondere wenigstens teilweise selbsttätig ausfahrbar.

Es ist bevorzugt und vorteilhaft, dass die Kraftspeichereinrichtung dazu geeignet und ausgebildet ist, das Klemmstück und die Keileinheit aneinander zu drücken. So kann durch das selbsttätige Ausfahren zugleich auch das Rotationsspiel ausgeglichen werden. Insbesondere ist die Kraftspeichereinrichtung innerhalb des zweiten Stützelements angeordnet. Insbesondere wird die Kraftspeichereinrichtung durch das Einfahren des ersten Stützelements in das zweite Stützelement aufgeladen und/oder durch ein Ausfahren des ersten Stützelements aus dem zweiten Stützelement wenigstens teilweise entladen. Die Kraftspeichereinrichtung umfasst insbesondere wenigstens eine Feder und z. B. eine Spiralfeder oder Gasfeder.

Vorzugsweise umfasst die Keileinheit wenigstens ein wenigstens abschnittsweise abgeschrägtes Keilprofil. Vorzugsweise umfasst das Klemmstück wenigstens ein mit dem Keilprofil zusammenwirkendes Klemmprofil. Vorzugsweise ist das Klemmprofil wenigstens teilweise abgerundet. Insbesondere ist das Klemmprofil teilkreisförmig und z. B. halbkreisförmig oder auch kurvenförmig ausgebildet. Das Klemmprofil kann auch wenigstens abschnittsweise abgeschrägt sein. Möglich sind auch andere geeignete Geometrien für das Klemmprofil. Das Keilprofil ist insbesondere vollständig abgeschrägt. Das Keilprofil kann auch wenigstens teilweise abgerundet sein. Das Keilprofil kann abschnittsweise abgeschrägt und abschnittsweise flach bzw. eben ausgebildet sein. Möglich ist auch, dass das Keilprofil V-förmig oder U-förmig ausgebildet ist. Das Keilprofil kann auch teilkreisförmig oder kurvenförmig ausgebildet sein.

Das Klemmstück ist insbesondere stabförmig ausgebildet. Das Klemmstück weist insbesondere einen mehreckigen und vorzugsweise viereckigen Querschnitt auf. Das Klemmstück kann auch einen runden Querschnitt aufweisen. Insbesondere weist das Klemmstück einen zum Querschnitt der Führungsnut korrespondierenden Querschnitt auf.

Es ist möglich, dass die Verdrehsicherung eine axiale Führung beim Verstellen der Sattelstützeinrichtung wenigstens ergänzend bereitstellt. Insbesondere werden die Stützelemente durch die Führungsnut und das Klemmstück beim Verstellen in axialer Richtung geführt. Es ist möglich, dass die Verdrehsicherung dazu geeignet und ausgebildet ist, auch ein axiales Spiel in wenigstens einer der Stellungen und insbesondere in der ausgefahrenen Stellung wenigstens teilweise zu blockieren.

Insbesondere ist das zweite Stützelement zur Aufnahme eines Sattels geeignet und ausgebildet. Insbesondere ist das erste Stützelement an einer Rahmenstruktur eines Fahrrads befestigbar oder daran ausgebildet. Möglich ist aber auch, dass das zweite Stützelement zur Befestigung an der Rahmenstruktur vorgesehen ist oder an einer solchen ausgebildet ist. Dann ist das erste Stützelement insbesondere zur Aufnahme eines Sattels ausgebildet.

Vorzugsweise ist das erste Stützelement wenigstens abschnittsweise innerhalb des zweiten Stützelements angeordnet. Insbesondere ist zum Teleskopieren der Sattelstützeinrichtung das zweite Stützelement wenigstens abschnittsweise in axialer Richtung über das erste Stützelement bewegbar. Möglich ist auch eine umgekehrte Ausgestaltung, sodass das zweite Stützelement wenigstens abschnittsweise innerhalb des ersten Stützelements angeordnet ist. Dann ist zum Teleskopieren das erste Stützelement wenigstens abschnittsweise über das zweite Stützelement bewegbar.

Es ist möglich, dass durch das Aneinanderdrücken von Klemmstück und Keileinheit das Klemmstück mittig in der Führungsnut ausrichtbar ist. Insbesondere ist das Klemmstück dabei in Umfangsrichtung bewegbar. Eine solche Ausgestaltung bietet eine erhebliche Reduzierung des Rotationsspiels in beide Drehrichtungen und ist besonders unaufwendig umsetzbar. Durch die mittige Ausrichtung des Klemmstücks in der Führungsnut ist das Rotationsspiel gar nicht mehr oder nur noch sehr gering wahrnehmbar. Insbesondere wird das Klemmstück durch die Keileinheit zwischen zwei gegenüberliegenden Längswandungen der Führungsnut bewegt und insbesondere ausgerichtet. In einer solchen Ausgestaltung ist das Keilprofil besonders bevorzugt V-förmig oder U-förmig ausgebildet. Das Klemmstück ist dann insbesondere abgerundet oder spitz ausgebildet.

In Weiterbildungen der erfindungsgemäßen Fahrradkomponente kann die Fahrradkomponente weitere Teile eine Fahrrads umfassen oder als ein vollständiges Fahrrad oder nahezu vollständiges Fahrrad ausgebildet sein. So kann die Fahrradkomponente wenigstens ein Laufrad und insbesondere zwei Laufräder und einen Rahmen und gegebenenfalls eine Gabel umfassen. Eine solche Fahrradkomponente bzw. ein Fahrrad ist insbesondere (wenigstens im normalen bestimmungsgemäßen Betriebszustand) wenigstens teilweise mit Muskelkraft betreibbar. Die Fahrradkomponente bzw. das Fahrrad umfasst wenigstens eine Fahrradkomponente, wie sie zuvor beschrieben wurde. Auch ein vollständiges Fahrrad löst die zuvor gestellte Aufgabe besonders vorteilhaft.

Das Klemmstück stellt insbesondere eine in Rotationsrichtung formschlüssige Verbindung zwischen den Stützelementen bereit. Das Klemmstück ist insbesondere zwischen den Stützelementen angeordnet. Insbesondere erstreckt sich das Klemmstück von der radialen Außenseite des ersten Stützelements zur radialen Innenseite des zweiten Stützelements.

Die axiale Richtung entspricht insbesondere einer Längsachse der Sattelstützeinrichtung und vorzugsweise der Stützelemente. Insbesondere entspricht die axiale Richtung einer Bewegungsachse der Verstellbewegung. Insbesondere blockiert die Verdrehsicherung eine Drehbewegung um eine Drehachse, welche in axialer Richtung verläuft. Insbesondere verläuft die Drehachse des Rotationsspiels in axialer Richtung.

Insbesondere ist durch das Aneinanderdrücken ein Spiel der Verdrehsicherung ausgleichbar und besonders bevorzugt ein Spiel des Klemmstücks in der Führungsnut ausgleichbar. Insbesondere ist dadurch ein rotatorisches Spiel bzw. Rotationsspiel zwischen den Stützelementen ausgleichbar. Durch das Aneinanderdrücken von Klemmstück und Keileinheit kann auch eine (sehr leichte) Kippbewegung des ersten Stützelementes relativ zum zweiten Stützelement ausgleichbar sein. Mittels der Verdrehsicherung kann ein Axialspiel zwischen den Stützelementen wenigstens teilweise ausgleichbar. Ein Ausgleichen des Spiels bedeutet insbesondere ein wenigstens teilweises Blockieren bzw. Aufheben des Spiels. Für das Aneinanderdrücken sind die Keileinheit und das Klemmstück relativ zueinander bewegbar. Durch das Aneinanderdrücken wirkt die Keileinheit auf das Klemmstück derart ein, dass das Klemmstück quer zur axialen Richtung und in Umfangsrichtung (der Stützelemente) bewegt wird. Insbesondere hat das Aneinanderdrücken von Klemmstück und Keileinheit immer das Bewegen des Klemmstücks quer zur axialen Richtung relativ zur Führungsnut zur Folge. Im Rahmen der vorliegenden Erfindung wird unter dem Begriff Keil bzw. Keileinheit jede Art von Geometrie verstanden, welche zur Erfüllung des hier beschriebenen Keilprinzips bzw. Klemmprinzips geeignet ist. Insbesondere ist das Klemmstück durch die Keileinheit in Umfangsrichtung bewegbar. Insbesondere erfolgt die Bewegung des Klemmstücks relativ zur Führungsnut. Dabei kann das Klemmstück fix sein, während sich die Führungsnut bewegt. Möglich ist auch, dass die Führungsnut fix ist, während sich das Klemmstück bewegt. Möglich ist auch, dass sich sowohl das Klemmstück als auch die Führungsnut bewegen.

Es ist möglich, das das Rotationsspiel zusätzlich zu der ausgefahrenen Stellung auch in einer eingefahrenen Stellung ausgleichbar ist. Dazu umfasst die Keileinrichtung insbesondere wenigstens eine weitere Keileinheit. Dabei sind die weitere Keileinheit und das Klemmstück oder ein weiteres Klemmstück in der eingefahrenen Stellung der Sattelstützeinrichtung, vorzugsweise nur in der eingefahrenen Stellung, aneinander drückbar.

In allen Ausgestaltungen ist es möglich, dass die Keileinrichtung wenigstens zwei oder wenigstens drei oder mehr Keileinheiten umfasst. Möglich ist auch, dass die Keileinrichtung wenigstens zwei oder wenigstens drei oder mehr weitere Keileinheiten umfasst. Möglich ist, dass die Verdrehsicherung wenigstens zwei oder wenigstens drei oder mehr Klemmstücke umfasst. Insbesondere sind für die Klemmstücke jeweils wenigstens eine Führungsnut und/oder jeweils wenigstens eine Keileinheit und gegebenenfalls jeweils wenigstens eine weitere Keileinheit vorgesehen.

Insbesondere ist die Sattelstützeinrichtung (nur) zwischen zwei Stellungen (ausgefahren, Sattel oben und eingefahren, Sattel unten) verstellbar. Die Stellungen sind insbesondere Endstellungen. Insbesondere sind keine Zwischenstellungen vorgesehen. Die Fahrradkomponente kann in einfachen Ausgestaltungen als Sattelstütze ausgebildet sein. Vorzugsweise sind rohrartige Stützelemente vorgesehen. Vorzugsweise sind die Stützelemente wenigstens teilweise hohl ausgebildet.

Weitere Vorteile und Merkmale der vorliegenden Erfindung ergeben sich aus der Beschreibung der Ausführungsbeispiele, welche mit Bezug auf die beiliegenden Figuren im Folgenden erläutert werden.

In den Figuren zeigen:
- Fig. 1: eine stark schematische Darstellung eines Fahrrads mit einer erfindungsgemäßen Fahrradkomponente;
- Fig. 2: eine schematische Darstellung einer erfindungsgemäßen Fahrradkomponente in einer Seitenansicht;
- Fig. 3: die Fahrradkomponente in einer entlang der Linie A-A der Fig. 2 geschnittenen Darstellung in einer Seitenansicht;
- Fig. 4: eine geschnittene Detaildarstellung der Fahrradkomponente der Fig. 3;
- Fig. 5: die Fahrradkomponente in einer entlang der Linie B-B der Fig. 2 geschnittenen Darstellung in einer Ansicht von unten;
- Fig. 6: eine teilweise aufgeschnittene Detaildarstellung der Fahrradkomponente der Fig. 2;
- Fig. 7: eine teilweise aufgeschnittene Detaildarstellung einer Ausgestaltung der Fahrradkomponente der Fig. 2;
- Fig. 8-10: stark schematische Detaildarstellungen von Verdrehsicherungen der Fahrradkomponente in verschiedenen Ausgestaltungen;
- Fig. 11: eine schematische Darstellung einer anderen Ausgestaltung der erfindungsgemäßen Fahrradkomponente in einer Seitenansicht;
- Fig. 12: die Fahrradkomponente in einer entlang der Linie A-A der Fig. 11 geschnittenen Darstellung in einer Seitenansicht;
- Fig. 13: eine geschnittene Detaildarstellung der Fahrradkomponente der Fig. 12;
- Fig. 14: die Fahrradkomponente in einer entlang der Linie B-B der Fig. 11 geschnittenen Darstellung in einer Ansicht von unten; und
- Fig. 15: eine teilweise aufgeschnittene Detaildarstellung der Fahrradkomponente der Fig. 11.

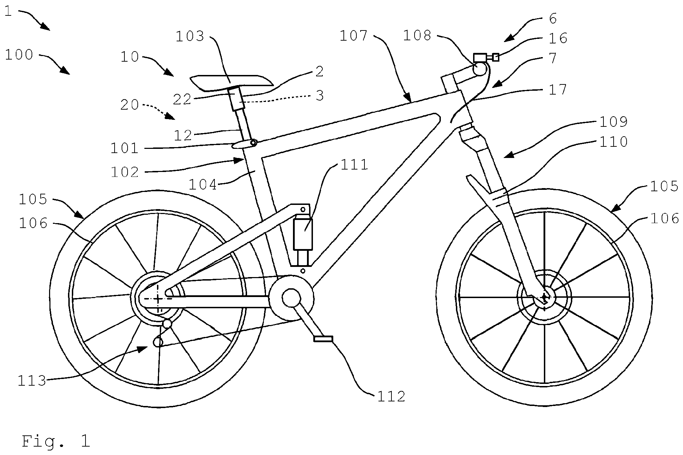

Die Figur 1 zeigt ein als ein Mountainbike ausgebildetes Fahrrad 100 mit einer erfindungsgemäßen Fahrradkomponente 1. Das Fahrrad 100 kann auch als ein teilweise muskelbetriebenes Zweirad und beispielsweise als ein E-Bike ausgebildet sein.

Das Fahrrad 100 weist zwei Laufräder 105 auf, welche hier mit jeweils einer Nabe und einer Felge 106 ausgestattet sind. Das Fahrrad 100 ist vollgefedert ausgeführt. Die Gabel 109 ist dazu als eine Federgabel 110 ausgebildet und der Rahmen 107 verfügt über einen Hinterraddämpfer 111.

Weiterhin umfasst das Fahrrad 100 einen Sattel 103, einen Rahmen 107, einen Lenker 108 sowie weitere Fahrradkomponenten. Als Teil eines Pedalantriebs 112 umfasst das Fahrrad 100 hier eine Kettenschaltung 113. Zudem verfügt das Fahrrad 100 über eine nicht näher gezeigte Bremseinrichtung.

Die Fahrradkomponente 1 umfasst eine verstellbare Sattelstützeinrichtung 2, welche hier in einer als Sattelrohr 104 ausgebildeten Rahmenstruktur 102 aufgenommen ist. Die Sattelstützeinrichtung 2 ist mittels einer Sattelrohrklemme 101 im Sattelrohr 104 befestigt.

Die Sattelstützeinrichtung 2 ist verstellbar ausgebildet, sodass der Sattel 103 in verschiedenen Positionen bzw. Sattelhöhen fixiert werden kann. Dazu umfasst die Sattelstützeinrichtung 2 hier zwei Stützelemente 12, 22, welche teleskopartig auseinandergezogen bzw. ineinandergeschoben werden können.

In der hier gezeigten Darstellung befindet sich die Sattelstützeinrichtung 2 in einer maximal ausgezogenen ersten Stellung 10. Zudem kann eine niedrigere Sattelhöhe eingestellt werden. Dadurch wird die Sattelstützeinrichtung 2 ineinandergeschoben und in eine hier nicht näher dargestellte maximal eingeschobene zweite Stellung 20 gebracht. In einer Ausgestaltung kann die Sattelstützeinrichtung auch in eine oder mehrere Zwischenstellungen verstellt werden.

Zum Arretieren einer eingestellten Sattelposition umfasst die Fahrradkomponente 1 eine hier nicht sichtbar im Inneren der Sattelstützeinrichtung 2 angeordnete Verriegelungseinrichtung 3. Zum Lösen bzw. Aktivieren der Arretierung ist hier eine Betätigungseinrichtung 6 mit einem an dem Lenker 108 befestigten Bedienteil 16 vorgesehen.

Die Betätigungseinrichtung 6 umfasst hier eine Seilzugeinrichtung 7 mit einem Seilzug 17. Die Seilzugeinrichtung 7 kann verschiedene Komponenten zur Führung des Seilzugs 17 und beispielsweise Umlenkrollen oder dergleichen umfassen. Der Seilzug 17 verläuft hier von dem Bedienteil 16 in den Rahmen 107 und dort durch das Sattelrohr 104 bis zur Sattelstützeinrichtung 2 und dabei vorzugsweise indirekt oder aber auch direkt zu der Verriegelungseinrichtung 3. Eine Abstützeinrichtung 27 dient zur Aufnahme und Abstützung einer hier nicht näher gezeigten Seilzughülle.

Beispielsweise wird der Seilzug 17 mit dem Bedienteil 16 gespannt, um die Verriegelungseinrichtung 3 zu lösen. Dann kann der Sattel entweder mit dem Gesäß tiefer gedrückt werden oder durch ein Anheben des Gesäßes mit Unterstützung einer hier nicht gezeigten Kraftspeichereinrichtung 9 nach oben bewegt werden. Die Sattelstützeinrichtung 2 verrastet dann in der jeweiligen Stellung 10, 20. Möglich ist auch, dass eine stufenlose Verstellung vorgesehen ist, sodass z. B. beim Loslassen des Bedienteils 16 der Sattel 103 in einer bestimmten Stellung verbleibt.

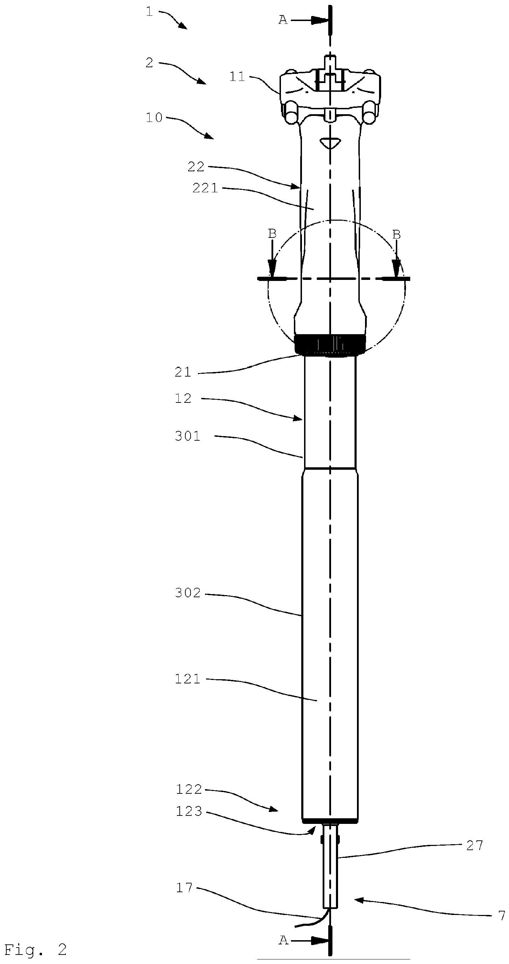

Die Figuren 2 bis 6 zeigen eine erfindungsgemäße Fahrradkomponente 1 in verschiedenen Darstellungen. Die Fahrradkomponente 1 wird nachfolgend mit Bezug zu den Figuren 2 bis 6 näher beschrieben.

Die Fahrradkomponente 1 umfasst eine Sattelstützeinrichtung 2 mit einem ersten bzw. unteren Stützelement 12 und einem zweiten bzw. oberen Stützelement 22. Die beiden Stützelemente 12, 22 sind teleskopierbar.

Das obere Stützelement 22 ist hier mit einer Sattelaufnahme 11 ausgestattet, über welche ein Sattel an der Sattelstützeinrichtung 2 montiert werden kann. Das zweite Stützelement 22 kann ein separates Teil sein oder aber integral mit der Rahmenstruktur des Fahrrades ausgebildet sein oder aber fest daran befestigt sein oder werden.

An dem der Sattelaufnahme 11 gegenüberliegenden Ende des oberen Stützelements 22 ist eine Dichtung 31 bzw. ein O-Ring angeordnet. Zur Aufnahme der Dichtung 31 weist das obere Stützelement 22 einen Kragen auf. An dem der Sattelaufnahme 11 gegenüberliegenden Ende des Stützelements 22 ist hier ein Schmutzabweiser 21 angeordnet. Dadurch werden Verunreinigungen beim Eintauchen abgestreift.

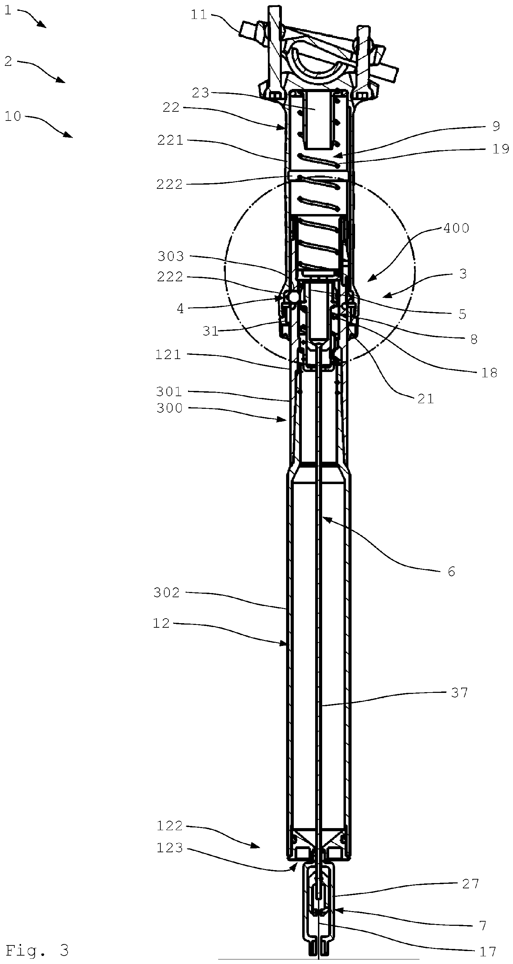

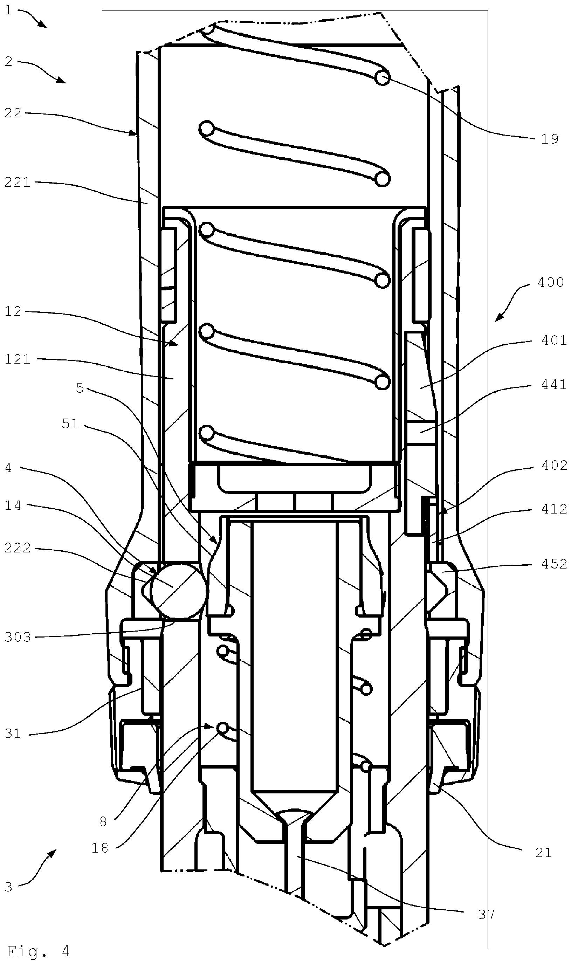

In den Figuren 3 und 4 sind die innenliegenden Komponenten der Fahrradkomponente 1 besonders gut zu erkennen. Die Verriegelungseinrichtung 3 ist hier im Wesentlichen innerhalb des ersten Stützelements 12 angeordnet. Die Verriegelungseinrichtung 3 umfasst hier eine Mehrzahl von Riegelelementen 4, von denen hier nur eine zu erkennen ist. Die Riegelelemente 4 sind hier als Kugeln 14 ausgebildet.

Dabei verläuft ein jeweiliges Riegelelement 4 durch eine Wandung 121 des ersten Stützelements 12. Dazu weist die Wandung 121 eine Durchgangsöffnung 303 auf. Das Riegelelement 4 erstreckt sich weiter in einen Teil einer Wandung 221 des zweiten Stützelements 22. Dort ist eine Ausnehmung 222 für das Riegelelement 4 eingearbeitet. Die Ausnehmung 222 ist hier umlaufend bzw. ringartig ausgebildet. Möglich ist aber auch eine Ausgestaltung, bei welcher für jedes der Riegelelemente 4 eine entsprechende Ausnehmung 222 vorgesehen ist.

Die Riegelelemente 4 werden hier von einem Kolbenelement 5 bzw. von einem Konus 51 des Kolbenelements 5 in die Ausnehmung 222 eingedrückt. In dieser Stellung verhindern die Riegelelemente 4, dass sich das zweite bzw. obere Stützelement 22 weiter absenken kann. Die Sattelhöhe bzw. die Position der beiden Stützelemente 12, 22 zueinander ist somit arretiert. Das Kolbenelement 5 und die Riegelelemente 4 befinden sich in einer verriegelten bzw. arretierten Stellung. Hier ist die obere Stellung 10 der Fahrradkomponente 1 bzw. der Sattelstütze bzw. Sattelstützeinrichtung 2 dargestellt. Die Riegelelemente 4 sind in den unteren Ausnehmungen 222 des zweiten Stützelementes 22 verriegelt.

Um die Verriegelungseinrichtung 3 zu lösen und die Sattelstützeinrichtung 2 einzufahren, wird das Kolbenelement 5 hier in Richtung der Längsachse der Stützelemente 12, 22 nach unten gezogen. Dann wird das Kolbenelement 5 in eine Lösestellung überführt. In der Lösestellung kann durch einen entsprechenden Druck auf den Sattel, beispielsweise mit dem Gesäß, die Sattelhöhe verringert werden.

Das Kolbenelement 5 ist hier konisch ausgebildet, sodass es zum oberen Ende hin schmaler wird. Wird das Kolbenelement 5 nach unten bewegt, drückt es die Riegelelemente 4 nicht mehr (über den Konus 51) in die Ausnehmung 222. So kann sich das obere Stützelement 22 über das untere Stützelement 12 schieben.

Um die Sattelhöhe in der eingefahrenen, niedrigeren Stellung 20 zu arretieren, umfasst die Verriegelungseinrichtung 3 hier eine zusätzliche, weiter oben liegende Ausnehmung 222. Dort können die Riegelelemente 4 durch das Kolbenelement 5 eingedrückt werden, sodass die Sattelstützeinrichtung 2 in dieser Stellung arretiert wird.

Die Fahrradkomponente 1 umfasst hier eine als Feder 19 ausgebildete Kraftspeichereinrichtung 9, welche beim Einfahren der Sattelstützeinrichtung 2 vorgespannt wird. Dazu ist die Feder 19 als Druckfeder ausgelegt. Wenn die Sattelstützeinrichtung 2 in der unteren Stellung 20 arretiert ist und das Kolbenelement 5 in die Lösestellung überführt wird, bewegt sich das obere Stützelement 22 zusammen mit dem Sattel automatisch durch die Kraft der vorgespannten Feder 19 nach oben.

Um das Kolbenelement 5 zuverlässig in der arretierten Stellung zu halten, ist die Verriegelungseinrichtung 3 hier mit einer Vorspanneinrichtung 8 ausgestattet. Die Verspanneinrichtung 8 umfasst hier eine Feder 18, welche das Kolbenelement 5 automatisch in die arretierte Stellung drückt.

Das Kolbenelement 5 wird hier mit einer Betätigungseinrichtung 6 mit einer Seilzugeinrichtung 7 zwischen der Lösestellung und der arretierten Stellung bewegt. Zum Lösen der Arretierung wird das Kolbenelement 5 mit einem Seilzug 17 der Seilzugeinrichtung 7 nach unten gezogen. Solange der Seilzug 17 unter Zug steht, verbleibt das Kolbenelement 5 in der Lösestellung und die Riegelelemente 4 werden nicht in die Ausnehmung 222 gedrückt. Wird der Seilzug 17 entspannt, drückt die Vorspanneinrichtung 8 die Kolbeneinheit 5 wieder in die arretierte Stellung.

Zum Betätigen der Seilzugeinrichtung 7 ist beispielsweise ein Bedienteil 16 wie mit Bezug zu der Figur 1 beschrieben vorgesehen. Die Seilzugeinrichtung 7 umfasst hier ein Koppelstück 37, welches sich zwischen dem Seilzug 17 und dem Kolbenelement 5 erstreckt und an diese angebunden ist. Das bietet viele Vorteile hinsichtlich Montage und Service und bietet zudem einen zuverlässigen Schutz der inneren Komponenten.

Das Koppelstück 37 ist hier vorteilhafterweise ein Draht und beispielsweise ein Speichendraht oder auch eine Speiche bzw. ein Speichenabschnitt. Möglich sind auch andere Drähte oder Stäbe oder dergleichen. Als Koppelstück 37 kann auch ein weiterer Seilzug vorgesehen sein. Es kann auch ein durchgehender Seilzug 17 vorgesehen sein. In der Figur 4 ist ein (konischer) (Speichen) Kopf des Koppelstücks 37 gut zu erkennen, welcher in dem Kolbenelement 5 aufgenommen ist.

Das Koppelstück 37 verläuft hier durch das untere Stützelement 12 und verlässt dieses an einem Ende 122, welches in dem Sattelrohr 104 des Fahrrads 100 aufnehmbar ist. Das Koppelstück 37 tritt hier an einer axialen Stirnseite 123 aus dem Stützelement 12 aus. Dort an der axialen Stirnseite 123 wird auch eine hier nicht näher dargestellte Seilzughülle für den Seilzug 17 mittels der Abstützeinrichtung 27 abgestützt. Von der Abstützeinrichtung 27 aus wird die Betätigungskraft über das Koppelstück 37 an das Kolbenelement 5 übertragen. Der Seilzug 17 erstreckt sich hier von der Abstützeinrichtung 27 bis zu dem am Lenker 108 befestigten Bedienteil 16.

Der Seilzug 17 verläuft hier durch das untere Stützelement 12 und verlässt dieses an einem Ende 122, welches in dem Sattelrohr 104 des Fahrrads 100 aufnehmbar ist. Der Seilzug 17 ist hier in einem Schutzrohr 37 aufgenommen. Der Seilzug 17 tritt an einer axialen Stirnseite 123 aus dem Stützelement aus. Dort an der axialen Stirnseite 123 wird auch eine hier nicht näher dargestellte Seilzughülle mittels der Abstützeinrichtung 27 abgestützt.

Das erste Stützelement 12 ist hier aus zwei rohrartigen und in einem Verbindungsbereich 300 miteinander verbundenen Stützabschnitten 301, 302 zusammengesetzt. Die Stützabschnitte 301, 302 sind in dem Verbindungsbereich 300 überlappend angeordnet. Der im betriebsgemäßen Zustand obere Stützabschnitt 301 hat hier eine größere Wandstärke als der untere Stützabschnitt 302. In dem oberen Stützabschnitt 301 befindet sich hier die Durchgangsöffnung 303 für die Riegelelemente 4. Zudem ist in dem oberen Stützabschnitt 301 das Kolbenelement 5 geführt.

Das erste Stützelement 12 weist hier eine Außenseite 120 auf, welche auf eine Innenseite 220 des zweiten Stützelements abgestimmt ist. Dabei wird die Außenseite 120 des ersten Stützelements 12 hier durch die beiden Stützabschnitte 301 und 302 bereitgestellt. So kann das obere Stützelement 22 leicht und ohne zu verkanten über den Verbindungsbereich 300 geschoben werden.

Im Bereich des oberen Endes des zweiten Stützelementes 22 ist eine Endlagendämpfung 23 vorgesehen. Auch am unteren Ende kann eine Endlagendämpfung vorgesehen sein.

Um in allen Stellungen der Betätigungseinrichtung dem Benutzer eine definierte Funktionsweise zu vermitteln, kann der Seilzug 17 mit einem hier nicht näher gezeigten Seilstraffer gekoppelt sein. In bevorzugten Ausgestaltungen ist ein Seilstraffer nicht nötig und nicht vorgesehen. Dadurch erhält der Benutzer bei Berührung oder Bewegung der Betätigungseinrichtung jederzeit ein definiertes haptisches Feedback. Der Seilstraffer umfasst eine Vorspanneinheit und ein Gleitelement, welches innerhalb des Kolbenelementes axial geführt wird. Das Gleitelement wird über die Vorspanneinheit in einen vorgespannten Zustand gedrückt und hält das Seil immer straff.

Die Fahrradkomponente 1 ist hier mit einer Verdrehsicherung 400 ausgestattet, welche ein Verdrehen des zweiten Stützelements 22 zusammen mit dem Sattel 103 gegenüber dem ersten Stützelement 12 blockiert. Dazu ist hier in das zweite Stützelement 12 eine Führungsnut 403 eingearbeitet. In der Führungsnut 403 ist ein Klemmstück 401 verschiebbar aufgenommen, welches hier an dem ersten Stützelement 12 befestigt ist. So werden die Stützelemente 12, 22 drehfest miteinander gekoppelt.

Um ein Rotationsspiel, welches z. B. durch ein Spiel des Klemmstücks 401 in der Führungsnut 403 bedingt ist, auszugleichen, ist die Verdrehsicherung 400 mit einer Keileinrichtung 402 ausgestattet. Die Keileinrichtung 402 umfasst eine Keileinheit 412, welche in der ausgefahrenen Stellung 10 gegen das Klemmstück 401 gedrückt wird. Durch das Aneinanderdrücken von Klemmstück 401 und Keileinheit 412 wird das Klemmstück 401 quer zur axialen Richtung relativ zur Führungsnut 403 in der Führungsnut 403 seitwärts verschoben. Da das Klemmstück 401 hier über das Stützelement 12 am Fahrrad 100 befestigt ist, bewegt sich hierbei nicht das Klemmstück 401, sondern die Führungsnut 403 zusammen mit dem zweiten Stützelement 22.

Durch das Verschieben wird das Klemmstück 401 mit einer Längsseite 411 an eine Längswandung 413 der Führungsnut 403 gedrückt. Dadurch werden die Stützelemente 12, 22 gegeneinander verspannt und das Rotationsspiel in beide Drehrichtungen ausgeglichen. So ist der Sattel 103 in der ausgefahrenen Stellung 10 ohne ein störendes Rotationsspiel fixiert.

Das Klemmstück 401 ist hier mit einer Bohrung 441 ausgestattet. Dort kann ein Werkzeug angreifen, um das Klemmstück 401 bei Servicearbeiten entfernen zu können.

In der hier gezeigten Ausführung sind das Klemmstück 401 und die Keileinheit 412 oberhalb der Riegelelemente 4 angeordnet.

Der erfindungsgemäße Ausgleich des Rotationsspiels erfordert keine besonders geringen Toleranzen für das Klemmstück 401 und die Führungsnut 403, sodass auf eine aufwendige Passung verzichtet werden kann. Bei der hier vorgestellten Erfindung ist es sogar möglich und vorteilhaft, dass das Klemmstück 401 mit einer großen Toleranz bzw. mit einem Mindestspiel in der Führungsnut 403 aufgenommen ist. Dadurch hat die Keileinheit 412 ausreichend Raum zum Bewegen des Klemmstücks 401 in der Führungsnut 403. Ein weiterer Vorteil ist, dass durch die größere Toleranz eine erheblich einfachere Fertigung der Führungsnut 403 und auch des Klemmstücks 401 möglich ist. Zudem wird dadurch eine erheblich einfachere Führung des Klemmstücks 401 in der Führungsnut 403 ermöglicht.

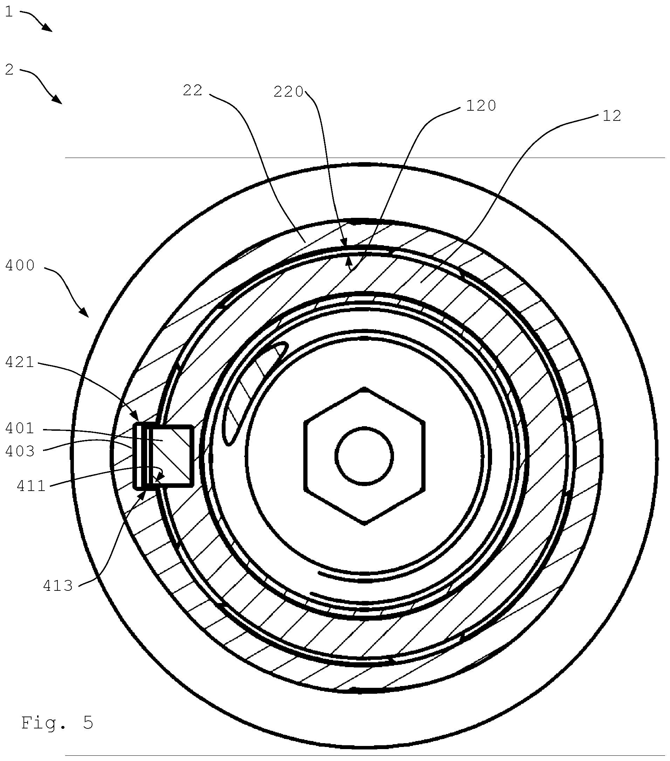

In der Figur 5 ist die Anordnung des Klemmstücks 401 in der Führungsnut 403 zwischen den Stützelementen 12, 22 besonders gut zu erkennen. Durch die hier gezeigte Anordnung bietet die Verdrehsicherung 400 zugleich auch eine axiale Führung der Stützelemente 12, 22. Hier ist auch gut zu erkennen, dass das zweite Stützelement 22 im Bereich der Führungsnut 403 eine erhöhte Wandstärke hat und dadurch eine unrunde äußere Querschnittskontur aufweist. Das Klemmstück 401 ist hier in einen Aufnahmeraum 421 im ersten Stützelement 12 eingelassen und ragt von dort in die Führungsnut 403 des zweiten Stützelements 22 hinein.

Die hier vorgestellte Verdrehsicherung 400 kommt mit nur einer einzigen Führungsnut 403 und mit nur einem einzigen Klemmstück 401 aus. Dadurch werden erhebliche Einsparungen bei Gewicht und Fertigungsaufwand erzielt.

Beim Verstellen der Sattelstützeinrichtung 2 gleitet das Klemmstück 401 in axialer Richtung durch die Führungsnut 403. Bei der hier gezeigten Anordnung der Stützelemente 12, 22 verbleibt das Klemmstück 401 zusammen mit dem ersten Stützelement 12 ortsfest an der Rahmenstruktur 102, während sich das zweite Stützelement 22 mit der Führungsnut 403 auf und ab bewegt. Entsprechend wird durch das Aneinanderdrücken von Klemmstück 401 und Keileinheit 412 hier das zweite Stützelement 22 gegenüber dem ersten Stützelement 12 und dessen Klemmstück 401 gedreht.

Um das Rotationsspiel in der ausgefahrenen Stellung 10 ausgleichen zu können, sind das Klemmstück 401 hier an einem oberen Endabschnitt des ersten Stützelements 12 und die Keileinheit an einem unteren Endabschnitt des zweiten Stützelements 22 angeordnet.

Wenn die Keileinheit 412 und das Klemmstück 401 aneinander gedrückt sind und das Klemmstück 401 an der Längswandung 413 anliegt, kann dieser Zustand hier durch die Verriegelungseinrichtung 3 fixiert werden. So erfolgt der Ausgleich des Rotationsspiels hier zugleich mit der Arretierung der Sattelstützeinrichtung 2 in der ausgefahrenen Stellung 10. Wenn die Verriegelungseinrichtung 3 betätigt, die Arretierung gelöst und die ausgefahrene Stellung 10 verlassen werden, entfernt sich die Keileinheit 412 von dem Klemmstück 401.

Bei der hier gezeigten Verdrehsicherung 400 werden das Klemmstück 401 und die Keileinheit 412 durch die Kraftspeichereinrichtung 9 aneinandergedrückt. So erfolgt der Ausgleich des Rotationsspiels automatisch durch das Ausfahren der Sattelstützeinrichtung 2. Bei Erreichen der ausgefahrenen Stellung 10 wird dieser Zustand fixiert.

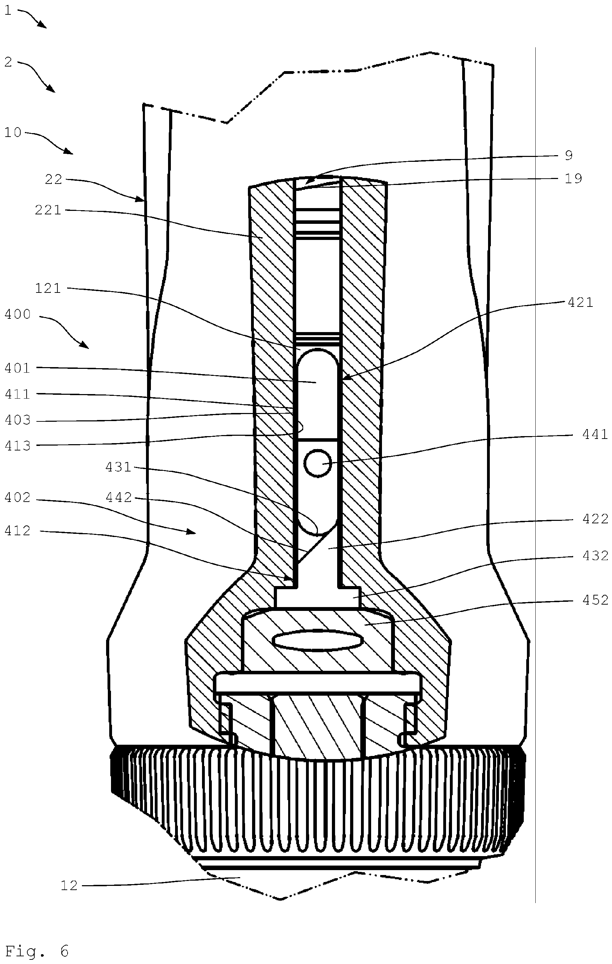

In der Figur 6 ist besonders gut zu erkennen, dass die Keileinheit 412 einen Keilabschnitt umfasst, welcher sich in die Führungsnut 403 erstreckt. Die Keileinheit 412 umfasst zudem einen Anbindungsabschnitt 432. Der Anbindungsabschnitt 432 ist außerhalb der Führungsnut 403 in das zweite Stützelement 22 eingelassen und dient zur Ausrichtung der Keileinheit 412. Dabei weist die Passung des Anbindungsabschnitts 432 hier eine geringere Toleranz als die Passung des Keilabschnitts 422 auf. So ist der Keilabschnitt 422 hier mit einem Spiel in der Führungsnut 403 aufgenommen. Ein Halteelement 452 sichert bzw. befestigt die Keileinheit 412 in der Führungsnut 403. Das Halteelement 452 kann hier als mechanischer Anschlag dienen, um den Weg beim Ausziehen der Stützelemente 12, 22 zu begrenzen.

Am Keilabschnitt 422 ist hier ein beispielhaftes abgeschrägtes Keilprofil 442 ausgebildet. Das Klemmstück 401 weist hier ein beispielhaftes abgerundetes Klemmprofil 431 auf.

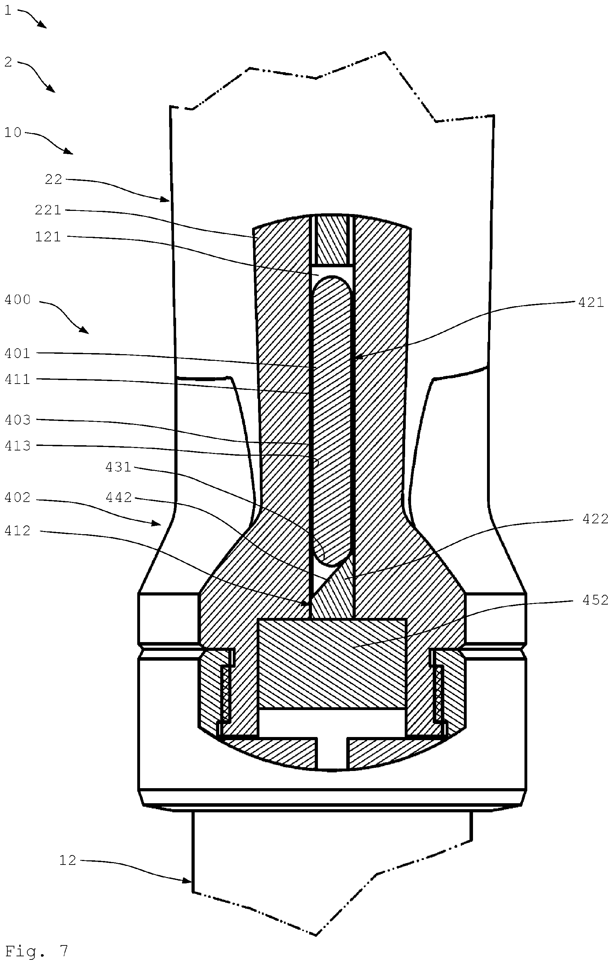

Die Figur 7 zeigt die Fahrradkomponente 1 in der Darstellung nach Figur 6 mit einer alternativ ausgestalteten Keileinheit 412. Die Keileinheit 412 wird hier nur durch den Keilabschnitt 422 bereitgestellt und ist vollständig in der Führungsnut 403 aufgenommen ist. Auf den Anbindungsabschnitt 432 wurde hier verzichtet. Das Halteelement 452 sichert bzw. befestigt die Keileinheit 412 in der Führungsnut 403.

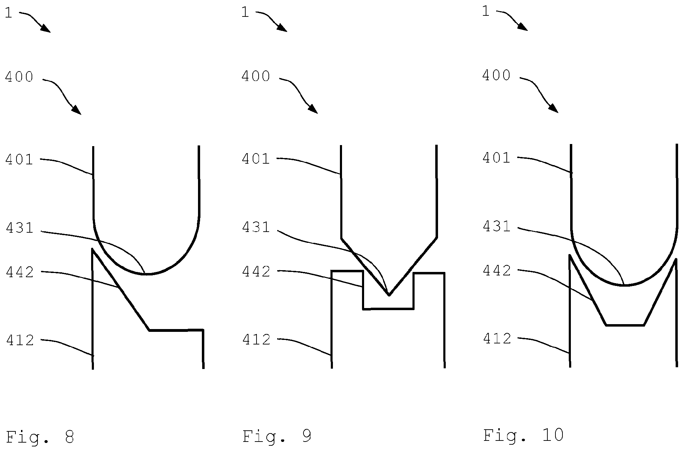

Die Figuren 8 bis 10 zeigen jeweils ein Keilprofil 442 einer Keileinheit 412 mit einem korrespondierenden Klemmprofil 431 eines Klemmstücks 401.

Das in der Figur 8 gezeigte Keilprofil 442 ist teilweise abgeschrägt und teilweise flach ausgebildet und das Klemmprofil abgerundet bzw. teilkreisförmig.

Das in der Figur 9 gezeigte nicht erfindungsgemäße Keilprofil 442 ist U-förmig. Das damit zusammenwirkende Klemmprofil 431 ist hier spitz ausgebildet.

Das in der Figur 10 gezeigte nicht erfindungsgemäße Keilprofil 442 ist V-förmig und das damit zusammenwirkende Klemmprofil 431 ist hier abgerundet bzw. teilkreisförmig ausgebildet. Durch solche Profile 442, 431 wird das Klemmstück 401 beim Andrücken an die Keileinheit 412 mittig in der Führungsnut ausgerichtet.

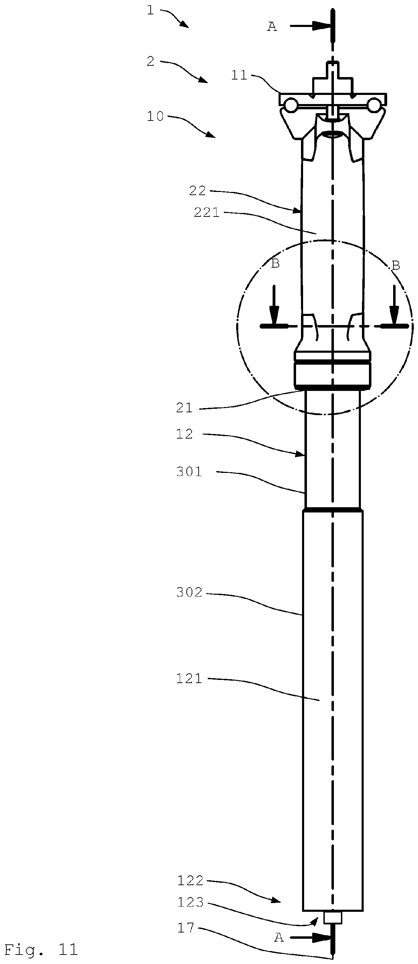

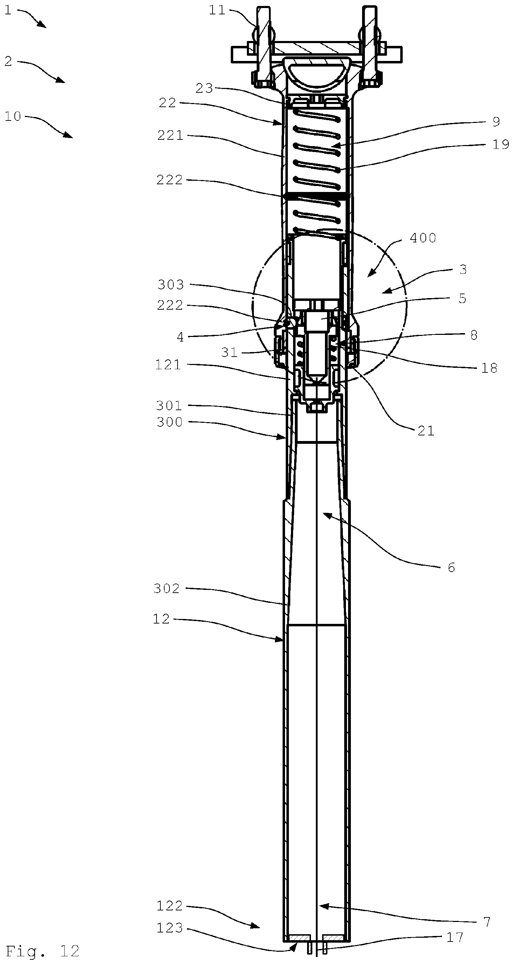

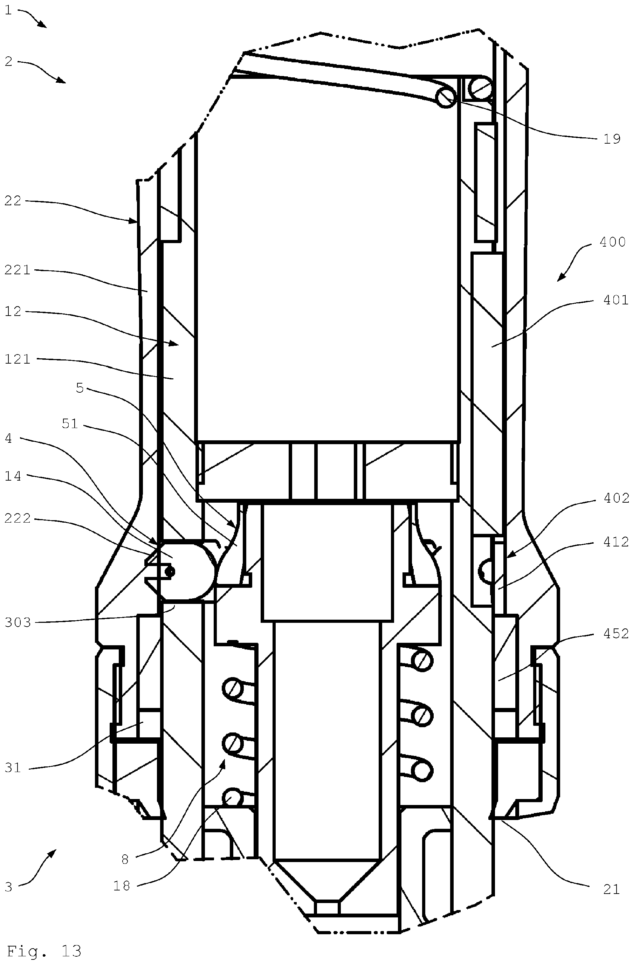

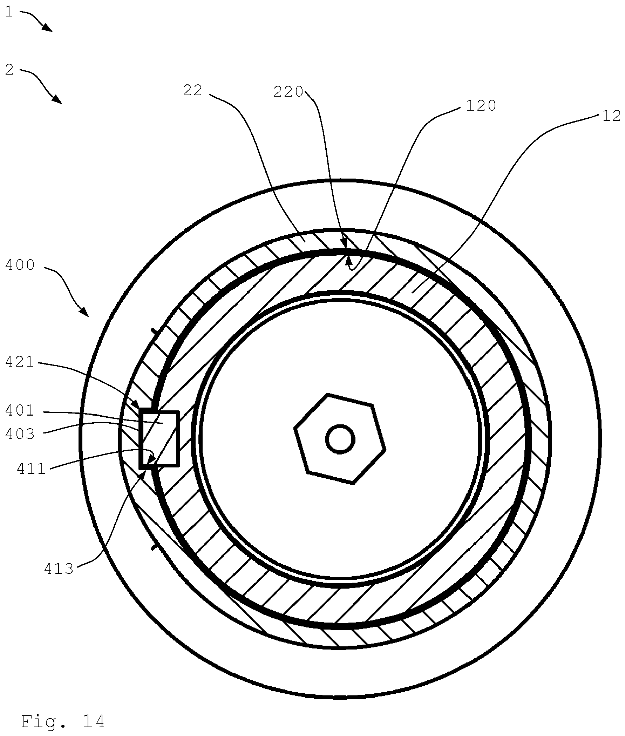

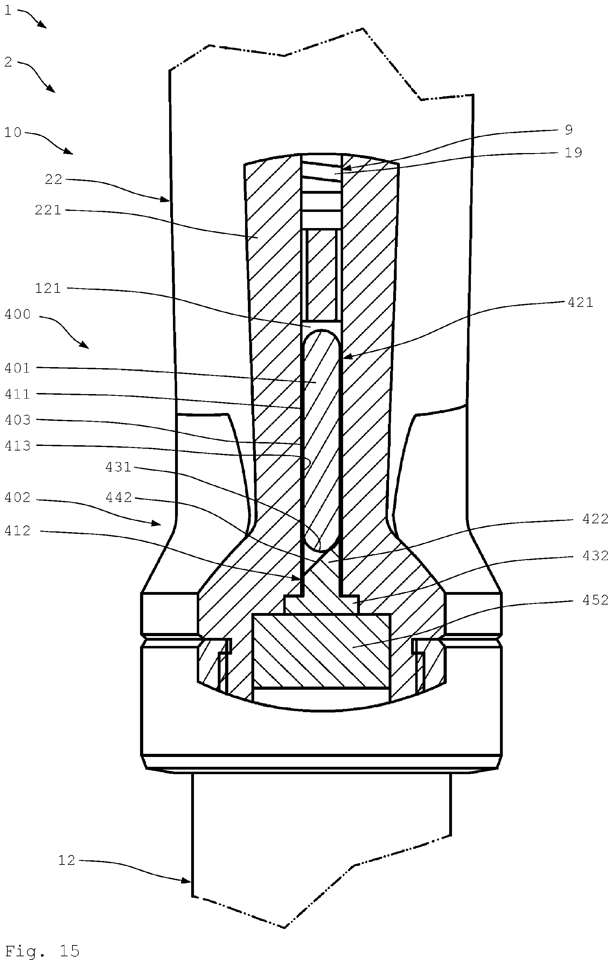

Die Figuren 11 bis 15 zeigen analog zu den Figuren 2 bis 6 die Fahrradkomponente 1 in einer alternativen Ausgestaltung. In der hier gezeigten Ausführung ist unter anderem das Klemmstück 401 oberhalb der Riegelelemente 4 angeordnet, während die Keileinheit 412 überlappend zu den Riegelelementen 4 angeordnet ist.

Die Seilzugeinrichtung 7 umfasst hier einen durchgehenden Seilzug 17. Der Seilzug 17 verläuft hier vom Kolbenelement 5 aus durch das untere Stützelement 12 und verlässt dieses an einem Ende 122, welches in dem Sattelrohr 104 des Fahrrads 100 aufnehmbar ist. Der Seilzug 17 tritt an einer axialen Stirnseite 123 aus dem Stützelement aus. Dort an der axialen Stirnseite 123 kann eine hier nicht näher dargestellte Seilzughülle abgestützt werden.

**Bezugszeichenliste:**

| | | | |
|---|---|---|---|
| 1 | Fahrradkomponente | 108 | Lenker |
| 2 | Sattelstützeinrichtung | 109 | Gabel |
| 3 | Verriegelungseinrichtung | 110 | Federgabel |
| 4 | Riegelelement | 111 | Dämpfer |
| 5 | Kolbenelement | 112 | Pedalantrieb |
| 6 | Betätigungseinrichtung | 113 | Kettenschaltung |
| 7 | Seilzugeinrichtung | 120 | Außenseite |
| 8 | Vorspanneinrichtung | 121 | Wandung |
| 9 | Kraftspeichereinrichtung | 122 | Ende |
| 10 | Stellung | 123 | Stirnseite |
| 11 | Sattelaufnahme | 220 | Innenseite |
| 12 | erstes Stützelement | 221 | Wandung |
| 14 | Kugel | 222 | Ausnehmung |
| 16 | Bedienteil | 223 | Vorsprung |
| 17 | Seilzug | 300 | Verbindungsbereich |
| 18 | Feder | 301 | Stützabschnitt |
| 19 | Feder | 302 | Stützabschnitt |
| 20 | Stellung | 303 | Durchgangsöffnung |
| 21 | Schmutzabweiser | 400 | Verdrehsicherung |
| 22 | zweites Stützelement | 401 | Klemmstück |
| 23 | Endlagendämpfer | 402 | Keileinrichtung |
| 27 | Abstützeinrichtung | 403 | Führungsnut |
| 31 | Dichtung | 411 | Längsseite |
| 37 | Koppelstück | 412 | Keileinheit |
| 51 | Konus | 413 | Längswandung |
| 100 | Fahrrad | 421 | Aufnahmeraum |
| 101 | Sattelrohrklemme | 422 | Keilabschnitt |
| 102 | Rahmenstruktur | 431 | Klemmprofil |
| 103 | Sattel | 432 | Anbindungsabschnitt |
| 104 | Sattelrohr | 441 | Bohrung |
| 105 | Laufrad | 442 | Keilprofil |
| 106 | Felge | 452 | Halteelement |
| 107 | Rahmen | | |

## Patentansprüche

1. Fahrradkomponente (1) für ein wenigstens teilweise mit Muskelkraft betriebenes Fahrrad (100), umfassend eine zwischen wenigstens zwei Stellungen (10, 20) verstellbare Sattelstützeinrichtung (2) mit wenigstens zwei in einer axialen Richtung relativ zueinander teleskopartig bewegbaren Stützelementen (12, 22), nämlich ein erstes Stützelement (12) und ein zweites Stützelement (22), und umfassend wenigstens eine Verdrehsicherung (400) mit wenigstens einem die Stützelemente (12, 22) drehfest miteinander koppelnden und in einer Führungsnut (403) verschiebbar aufgenommenen Klemmstück (401), sodass eine Drehbewegung des ersten Stützelements (12) relativ zum zweiten Stützelement (22) wenigstens teilweise blockierbar ist,
wobei die Verdrehsicherung (400) wenigstens eine Keileinrichtung (402) mit wenigstens einer in axialer Richtung an das Klemmstück (401) drückbaren Keileinheit (412) umfasst,
**dadurch gekennzeichnet,**
**dass** durch ein Aneinanderdrücken von Klemmstück (401) und Keileinheit (412) das Klemmstück (401) quer zur axialen Richtung und in Umfangsrichtung der Stützelemente (12, 22) relativ zur Führungsnut (403) bewegbar ist.

2. Fahrradkomponente (1) nach dem vorhergehenden Anspruch, wobei das Klemmstück (401) und die Keileinheit (412) wenigstens durch ein Verstellen der Sattelstützeinrichtung (2) aneinander drückbar sind.

3. Fahrradkomponente (1) nach einem der vorhergehenden Ansprüche, wobei das Klemmstück (401) und die Keileinheit (412) in einer der Stellungen (10, 20), vorzugsweise in einer ausgefahrenen Stellung (10) der Sattelstützeinrichtung (2) aneinander gedrückt sind.

4. Fahrradkomponente (1) nach einem der vorhergehenden Ansprüche oder nach dem Oberbegriff von Anspruch 1, wobei durch das Aneinanderdrücken von Klemmstück (401) und Keileinheit (412) die Stützelemente (12, 22) gegeneinander verspannbar sind, sodass ein Rotationsspiel zwischen den Stützelementen (12, 22) in beide Drehrichtungen blockierbar ist.

5. Fahrradkomponente (1) nach einem der vorhergehenden Ansprüche, wobei die Verdrehsicherung (400) nur eine Führungsnut (403) und nur ein Klemmstück (401) aufweist.

6. Fahrradkomponente (1) nach einem der vorhergehenden Ansprüche, wobei das Klemmstück (401) mit einem Mindestspiel in der Führungsnut (403) aufgenommen ist, um ein gezieltes Verschieben und/oder Kippen des Klemmstücks (401) in der Führungsnut (403) durch die Keileinheit (412) zu gewährleisten und/oder wobei das Klemmstück (401) und die Keileinheit (412) beim Aneinanderdrücken an jeweils einem Stützelement (12, 22) abstützbar sind.

7. Fahrradkomponente (1) nach einem der vorhergehenden Ansprüche, wobei durch das Aneinanderdrücken von Klemmstück (401) und Keileinheit (412) das Klemmstück (401) seitwärts verschiebbar und/oder kippbar ist und dadurch wenigstens abschnittsweise mit wenigstens einer Längsseite (411) an wenigstens eine Längswandung (413) der Führungsnut (403) drückbar ist
und/oder wobei das Klemmstück (401) bei einem Verstellen der Sattelstützeinrichtung (2) innerhalb der Führungsnut (403) in axialer Richtung verschiebbar ist.

8. Fahrradkomponente (1) nach einem der vorhergehenden Ansprüche, wobei die Führungsnut (403) und die Keileinheit (412) an einem gemeinsamen Stützelement (12, 22) angeordnet sind und wobei das Klemmstück (401) an einem anderen Stützelement (12, 22) als die Führungsnut (403) und die Keileinheit (412) befestigt ist
und/oder wobei die Keileinheit (412) und die Führungsnut (403) an einer radialen Innenseite ((220) des zweiten Stützelements (22) angeordnet sind und/oder wobei das Klemmstück (401) an einer radialen Außenseite (120) des ersten Stützelements (12) befestigt ist
und/oder wobei das Stützelement (12, 22) im Bereich der Führungsnut (403) eine erhöhte Wandstärke aufweist, sodass sich dadurch insbesondere eine unrunde äußere Querschnittskontur ergibt.

9. Fahrradkomponente (1) nach einem der vorhergehenden Ansprüche, wobei das Klemmstück (401) teilweise in wenigstens einen Aufnahmeraum (421) des ersten Stützelements (12) eingelassen ist und über einen äußeren Umfang des ersten Stützelements (12) teilweise hinausragt in die Führungsnut (403) des zweiten Stützelements (22) hineinragt.

10. Fahrradkomponente (1) nach einem der vorhergehenden Ansprüche, wobei durch das Aneinanderdrücken von Klemmstück (401) und Keileinheit (412) das erste Stützelement (12) relativ zum zweiten Stützelement (22) drehbar ist und/oder wobei das Klemmstück (401) an einem oberen Endabschnitt des ersten Stützelements (12) angeordnet ist und wobei die Keileinheit (412) an einem unteren Endabschnitt des zweiten Stützelements (22) angeordnet ist und/oder wobei die Keileinheit (412) wenigstens einen sich in die Führungsnut (403) erstreckenden Keilabschnitt (422) und wenigstens einen außerhalb der Führungsnut (403) wenigstens teilweise in das zweite Stützelement (22) eingelassenen Anbindungsabschnitt (432) aufweist und wobei eine Passung des Anbindungsabschnitts (432) an dem zweiten Stützelement (22) eine geringere Toleranz als eine Passung des Keilabschnitts (422) an dem zweiten Stützelement (22) aufweist.

11. Fahrradkomponente (1) nach einem der vorhergehenden Ansprüche, umfassend wenigstens eine Verriegelungseinrichtung (3) zum Arretieren der Sattelstützeinrichtung (2) in wenigstens einer der Stellungen (10, 20), wobei die Verriegelungseinrichtung (3) dazu geeignet und ausgebildet ist, das Klemmstück (401) und die Keileinheit (412) in einem aneinander gedrückten Zustand zu fixieren und wobei insbesondere das Klemmstück (401) und/oder die Keileinheit (412) wenigstens teilweise oberhalb eines Riegelelements (4) der Verriegelungseinrichtung (3) angeordnet sind.

12. Fahrradkomponente (1) nach einem der vorhergehenden Ansprüche, umfassend wenigstens eine Kraftspeichereinrichtung (9), welche dazu geeignet und ausgebildet ist, durch ein Einfahren der Sattelstützeinrichtung (2) wenigstens teilweise aufgeladen zu werden und durch ein Ausfahren der Sattelstützeinrichtung (2) wenigstens teilweise entladen zu werden, sodass die Sattelstützeinrichtung (2) wenigstens teilweise selbsttätig ausfahrbar ist und wobei Kraftspeichereinrichtung (9) dazu geeignet und ausgebildet ist, das Klemmstück (401) und die Keileinheit (412) aneinander zu drücken.

13. Fahrradkomponente (1) nach einem der vorhergehenden Ansprüche, wobei die Keileinheit (412) wenigstens ein wenigstens abschnittsweise abgeschrägtes Keilprofil (442) aufweist und wobei das Klemmstück (401) wenigstens ein mit dem Keilprofil (442) zusammenwirkendes Klemmprofil (431) aufweist und wobei das Klemmprofil (431) vorzugsweise abgerundet ist.

14. Fahrradkomponente (1) nach einem der vorhergehenden Ansprüche, wobei die Verdrehsicherung (400) eine axiale Führung beim Verstellen der Sattelstützeinrichtung (2) bereitstellt.

15. Fahrradkomponente (1) nach einem der vorhergehenden Ansprüche, wobei das zweite Stützelement (22) zur Aufnahme eines Sattels (103) dient und/oder wobei das erste Stützelement (12) wenigstens abschnittsweise innerhalb des zweiten Stützelements (22) angeordnet ist und wobei zum Teleskopieren der Sattelstützeinrichtung (2) das zweite Stützelement (22) wenigstens abschnittsweise über das erste Stützelement (12) bewegbar ist und/oder wobei durch das Aneinanderdrücken von Klemmstück (401) und Keileinheit (412) das Klemmstück (401) mittig in der Führungsnut ausrichtbar ist.

## Claims

1. Bicycle component (1) for an at least partially muscle-powered bicycle (100), comprising a seat post device (2) adjustable between at least two positions (10, 20), comprising at least two support members (12, 22) telescopically movable relative to one another in an axial direction, namely, a first support member (12) and a second support member (22), and comprising at least one anti-twist protection (400) with at least one clamping element (401) non-rotatably interlinking the support members (12, 22) and displaceably received in a guiding groove (403), so that rotational movement of the first support member (12) relative to the second support member (22) can be at least partially blocked,
wherein the anti-twist protection (400) comprises at least one spline device (402) with at least one spline unit (412) that can be urged against the clamping element (401) in the axial direction,
**characterized in**
**that** by pressing the clamping element (401) and the spline unit (412) together, the clamping element (401) can be moved transverse to the axial direction and relative to the guiding groove (403), in the peripheral direction of the support members (12, 22) .

2. The bicycle component (1) according to the preceding claim,
wherein the clamping element (401) and the spline unit (412) can be pressed together at least by adjusting the seat post device (2) .

3. The bicycle component (1) according to any of the preceding claims, wherein the clamping element (401) and the spline unit (412) are pressed together in one of the positions (10, 20), preferably in an extended position (10) of the seat post device (2) .

4. The bicycle component (1) according to any of the preceding claims or according to the introductory portion of claim 1, wherein the pressing together of the clamping element (401) and the spline unit (412) causes the support members (12, 22) to be braced against one another, so that any rotation play between the support members (12, 22) can be blocked in both rotational directions.

5. The bicycle component (1) according to any of the preceding claims, wherein the anti-twist protection (400) comprises one guiding groove (403) only and one clamping element (401) only.

6. The bicycle component (1) according to any of the preceding claims, wherein the clamping element (401) is received in the guiding groove (403) with minimum play, so as to ensure controlled displacement and/or tilting of the clamping element (401) in the guiding groove (403) by the spline unit (412), and/or wherein in pressing together, the clamping element (401) and the spline unit (412) can be supported on one support member (12, 22) each.

7. The bicycle component (1) according to any of the preceding claims, wherein by pressing the clamping element (401) and the spline unit (412) together, the clamping element (401) can be displaced sideways and/or tilted and in this way at least one longitudinal face (411) can be pressed at least in sections to at least one longitudinal wall (413) of the guiding groove (403), and/or wherein in adjusting the seat post device (2), the clamping element (401) is displaceable in the guiding groove (403) in the axial direction.

8. The bicycle component (1) according to any of the preceding claims, wherein the guiding groove (403) and the spline unit (412) are disposed on one shared support member (12, 22), and wherein the clamping element (401) is fastened to a different support member (12, 22) than are the guiding groove (403) and the spline unit (412), and/or wherein the spline unit (412) and the guiding groove (403) are disposed on a radially inside surface (220) of the second support member (22), and/or wherein the clamping element (401) is fastened to a radially outside surface (120) of the first support member (12), and/or wherein the support member (12, 22) shows an increased wall thickness in the region of the guiding groove (403), so as to result in particular in a non-round outer cross-sectional contour.

9. The bicycle component (1) according to any of the preceding claims, wherein the clamping element (401) is partially recessed in at least one receiving space (421) of the first support member (12), and partially protrudes beyond an outer circumference of the first support member (12), projecting into the guiding groove (403) of the second support member (22).

10. The bicycle component (1) according to any of the preceding claims, wherein by pressing the clamping element (401) and the spline unit (412) together, the first support member (12) is rotatable relative to the second support member (22), and/or wherein the clamping element (401) is disposed on an upper end portion of the first support member (12), and wherein the spline unit (412) is disposed on a lower end portion of the second support member (22), and/or wherein the spline unit (412) comprises at least one spline section (422) extending into the guiding groove (403), and at least one linking section (432) at least partially recessed in the second support member (22) external of the guiding groove (403), and wherein the fit of the linking section (432) with the second support member (22) shows a narrower tolerance than does the fit of the spline section (422) with the second support member (22).

11. The bicycle component (1) according to any of the preceding claims, comprising at least one locking device (3) for locking the seat post device (2) in at least one of the positions (10, 20), wherein the locking device (3) is suitable and configured to fix the clamping element (401) and the spline unit (412) in a state of being pressed together, and/or wherein in particular the clamping element (401) and/or the spline unit (412) are at least partially disposed above a bolt member (4) of the locking device (3).

12. The bicycle component (1) according to any of the preceding claims, comprising at least one energy storage device (9), which is suitable and configured to be at least partially loaded by retracting the seat post device (2), and to be at least partially unloaded by extending the seat post device (2), so that the seat post device (2) can be extended at least partially automatically, and wherein the energy storage device (9) is suitable and configured to press the clamping element (401) and the spline unit (412) together,

13. The bicycle component (1) according to any of the preceding claims, wherein the spline unit (412) comprises at least one spline profile (442) canted at least in sections, and wherein the clamping element (401) comprises at least one clamping profile (431) interacting with the spline profile (442), and wherein the clamping profile (431) is preferably rounded.

14. The bicycle component (1) according to any of the preceding claims, wherein the anti-twist protection (400) provides an axial guide in adjusting the seat post device (2).

15. The bicycle component (1) according to any of the preceding claims, wherein the second support member (22) serves to receive a saddle (103), and/or wherein the first support member (12) is disposed inside of the second support member (22) at least in sections, and wherein for telescoping the seat post device (2), the second support member (22) can be moved over the first support member (12) at least in sections, and/or wherein by pressing the clamping element (401) and the spline unit (412) together, the clamping element (401) can be centrally aligned in the guiding groove.

## Revendications

1. Composante de bicyclette (1) pour une bicyclette (100) entraînée au moins partiellement par force musculaire, comprenant un système de support de selle (2) réglable entre au moins deux positions (10, 20), doté d'au moins deux éléments de support (12, 22) mobiles de manière télescopique l'un par rapport à l'autre dans une direction axiale, à savoir un premier élément de support (12) et un deuxième élément de support (22), et comprenant au moins un dispositif anti-rotation (400) doté d'au moins une pièce de serrage (401) couplant les éléments de support (12, 22) entre eux de manière solidaire en rotation et reçue de manière coulissante dans une rainure de guidage (403), de sorte qu'un mouvement rotatif du premier élément de support (12) par rapport au deuxième élément de support (22) peut être bloqué au moins partiellement,
dans laquelle le dispositif anti-rotation (400) comprend au moins un dispositif de calage (402) doté d'au moins une unité de calage (412) pouvant être pressée dans le sens axial contre la pièce de serrage (401),
**caractérisée en ce**
**que**, en pressant la pièce de serrage (401) et l'unité de calage (412) l'une contre l'autre, la pièce de serrage (401) peut être déplacée transversalement à la direction axiale et dans le sens périphérique des éléments de support (12, 22) par rapport à la rainure de guidage (403).

2. Composante de bicyclette (1) selon la revendication précédente, dans laquelle la pièce de serrage (401) et l'unité de calage (412) peuvent être pressées l'une contre l'autre au moins par un réglage du dispositif de support de selle (2).

3. Composante de bicyclette (1) selon l'une quelconque des revendications précédentes, dans laquelle la pièce de serrage (401) et l'unité de calage (412) pouvant être pressées l'une contre l'autre dans une des positions (10, 20), de préférence dans une position (10) où le dispositif de support de selle (2) est déployé.

4. Composante de bicyclette (1) selon l'une quelconque des revendications précédentes ou selon le terme générique de la revendication 1, dans laquelle les éléments de support (12, 22) peuvent être serrés l'un contre l'autre en pressant la pièce de serrage (401) et l'unité de calage (412) l'une contre l'autre, de sorte qu'un jeu de rotation entre les éléments de support (12, 22) peut être bloqué dans les deux sens de rotation.

5. Composante de bicyclette (1) selon l'une quelconque des revendications précédentes, dans laquelle le dispositif anti-rotation (400) ne présente qu'une rainure de guidage (403) et/ou qu'une pièce du serrage (401),

6. Composante de bicyclette (1) selon l'une quelconque des revendications précédentes, dans laquelle la pièce de serrage (401) est montée avec un jeu minimum dans la rainure de guidage (403) pour assurer un déplacement ciblé et/ou un basculement de la pièce de serrage (401) dans la rainure de guidage (403) par l'unité de calage (412), et/ou dans laquelle la pièce de serrage (401) et l'unité de calage (412) peuvent être appuyées respectivement à un élément de support (12, 22) lorsqu'elles sont pressées l'une contre l'autre.

7. Composante de bicyclette (1) selon l'une quelconque des revendications précédentes, dans laquelle, en serrant la pièce de serrage (401) et l'unité de calage (412) l'une contre l'autre, la pièce de serrage (401) peut être déplacée latéralement et/ou basculée et peut ainsi être pressée au moins par sections avec au moins un côté longitudinal (411) contre au moins une paroi longitudinale (413) de la rainure de guidage (403),
et/ou dans laquelle la pièce de serrage (401) peut être déplacée dans le sens axial à l'intérieur de la rainure de guidage (403) lors d'un réglage du dispositif de support de la selle (2).

8. Composante de bicyclette (1) selon l'une quelconque des revendications précédentes, dans laquelle la rainure de guidage (403) et l'unité de calage (412) sont agencées sur un élément de support commun (12, 22), et dans laquelle la pièce de serrage (401) est fixée à un autre élément de support (12, 22) que celui de la rainure de guidage (403) et de l'unité de calage (412),
et/ou dans laquelle l'unité de calage (412) et la rainure de guidage (403) sont agencées sur une face intérieure (220) radiale du deuxième élément de support (22), et/ou dans laquelle la pièce de serrage (401) est fixée sur une face extérieure radiale (120) du premier élément de support (12) et/ou dans laquelle l'élément de support (12, 22) présente une épaisseur de paroi accrue dans la zone de la rainure de guidage (403), de sorte qu'il en résulte notamment un contour de section transversale non rond.

9. Composante de bicyclette (1) selon l'une quelconque des revendications précédentes, dans laquelle la pièce de serrage (401) est partiellement encastrée dans au moins un espace de réception (421) du premier élément de support (12) et saille partiellement au-delà d'une périphérie extérieure du premier élément de support (12) dans la rainure de guidage (403) du deuxième élément de support (22).

10. Composante de bicyclette (1) selon l'une quelconque des revendications précédentes, dans laquelle le premier élément de support (12) peut être mis en rotation par rapport au deuxième élément de support (22) en pressant la pièce de serrage (401) et l'unité de calage (412) l'une contre l'autre,
et/ou dans laquelle la pièce de serrage (401) est agencée à une section d'extrémité supérieure du premier élément de support (12), et dans laquelle l'unité de calage (412) est agencée à une section d'extrémité inférieure du deuxième élément de support (22),
et/ou dans laquelle l'unité de calage (412) présente au moins une section de calage (422) s'étendant dans la rainure de guidage (403) et au moins une partie de rattachement (432) encastrée à l'extérieur de la rainure de guidage (403) au moins partiellement dans le deuxième élément de support (22), et dans laquelle un ajustement de la partie de rattachement (432) au deuxième élément de support (22) présente une tolérance inférieure à celle d'un ajustement de la partie de calage (422) au deuxième élément de support (22).

11. Composante de bicyclette (1) selon l'une quelconque des revendications précédentes, comprenant au moins un dispositif de verrouillage (3) pour bloquer le dispositif de support de selle (2) dans au moins une des positions (10, 20), dans laquelle le dispositif de verrouillage (3) est susceptible de et conçu pour fixer la pièce de serrage (401) et l'unité de calage (412) dans un état pressé l'une contre l'autre, et dans laquelle notamment la pièce de serrage (401) et/ou l'unité de calage (412) sont agencées au moins partiellement au-dessus d'un élément de verrouillage (4) du dispositif de verrouillage (3).

12. Composante de bicyclette (1) selon l'une quelconque des revendications précédentes, comprenant au moins un dispositif d'accumulation de force (9) susceptible de et conçu pour être au moins partiellement chargé en rétractant le dispositif de support de selle (2), et pour être déchargé au moins partiellement en déployant le dispositif de support de selle (2), de sorte que le dispositif de support de selle (2) peut être déployé au moins partiellement de manière automatique, et dans laquelle le dispositif d'accumulation de force (9) est susceptible de et conçu pour presser la pièce de serrage (401) et l'unité de calage (412) l'une contre l'autre.

13. Composante de bicyclette (1) selon l'une quelconque des revendications précédentes, dans laquelle l'unité de calage (412) présente au moins un profil de calage (442) au moins partiellement biseauté et dans laquelle la pièce de serrage (401) présente au moins un profil de serrage (431) coopérant avec le profil de calage (442), et dans laquelle le profil de serrage (431) est de préférence arrondi.

14. Composante de bicyclette (1) selon l'une quelconque des revendications précédentes, dans laquelle le dispositif anti-rotation (400) fournit un guidage axial lors du réglage du dispositif de support de selle (2).

15. Composante de bicyclette (1) selon l'une quelconque des revendications précédentes, dans laquelle le deuxième élément de support (22) sert à recevoir une selle (103) et/ou dans laquelle le premier élément de support (12) est agencé au moins partiellement à l'intérieur du deuxième élément de support (22), et dans laquelle, pour télescoper le dispositif de support de selle (2), le deuxième élément de support (22) peut être déplacé au moins partiellement au-dessus du premier élément de support (12) et/ou dans laquelle la pièce de serrage (401) peut être mise en position au centre de la rainure de guidage en pressant la pièce de serrage (401) et l'unité de calage (412) l'une contre l'autre.r
